# EUROPÄISCHE PATENTSCHRIFT

(11) **EP 3 982 211 B1**
(45) Veröffentlichungstag und Bekanntmachung des Hinweises auf die Patenterteilung: **13.05.2026**
(21) Anmeldenummer: 21201684.4
(22) Anmeldetag: 08.10.2021
(51) Int. Cl.: G05B 17/02, G05B 13/02, G06N 20/00

(54) **VERFAHREN UND VORRICHTUNG ZUR SIMULATION EINER BEARBEITUNG AN EINER WERKZEUGMASCHINE MITTELS SELBSTLERNENDEM SYSTEM**
METHOD AND DEVICE FOR SIMULATING PROCESSING ON A MACHINE TOOL BY MEANS OF A SELF-LEARNING SYSTEM
PROCÉDÉ ET DISPOSITIF DE SIMULATION D'UN USINAGE SUR UNE MACHINE-OUTIL AU MOYEN D'UN SYSTÈME D'APPRENTISSAGE AUTOMATIQUE

(30) Priorität: 09.10.2020 DE 102020212798
(43) Veröffentlichungstag der Anmeldung: 13.04.2022
(73) Patentinhaber: DMG MORI Digital GmbH, 33689 Bielefeld (DE)
(72) Erfinder: KUHN, Tommy, 72119 Ammerbuch (DE); NIEDERWESTBERG, Daniel, 49326 Melle (DE)
(74) Vertreter: MERH-IP Matias Erny Reichl Hoffmann Patentanwälte PartG mbB

(56) Entgegenhaltungen:
- DE-A1- 102010 012 620
- DE-T5- 112018 005 809

## Beschreibung

Die vorliegende Erfindung betrifft eine Vorrichtung und ein Verfahren zur Simulation eines Bearbeitungsprozesses eines Werkstücks an einer Werkzeugmaschine mittels eines selbstlernenden, künstlichen neuronalen Netzwerkwerks, in welchem das künstliche neuronale Netzwerkwerk Prozess- und Parameterdaten des Bearbeitungsprozesses sowohl von einer realen Werkzeugmaschine als auch von einem digitalen Maschinenmodell erhalten kann und zur Optimierung der Simulation und/oder des realen Bearbeitungsprozesses nutzt.

### Hintergrund der Erfindung

Aufgrund der stetigen Komplexitätszunahme heutiger Werkstück-Bearbeitungsprozesse, insbesondere im Bereich der maschinell ausgeführten oder unterstützten Bearbeitung von Werkstücken, sehen sich neuartige Werkzeugmaschinen zumeist mit einer Vielzahl von gestiegenen, qualitativen oder ökonomischen Anforderungen konfrontiert. Immer diffizilere Prozessmechaniken fordern eine zunehmend leistungsfähigere und/oder präzisere Maschinenkinematik, welche mit verbesserten Funktionen der Maschinenmechanik, der -Antriebe oder etwa der Steuerung einhergeht, jedoch in den meisten Fällen auch zu erhöhten Einstellzeiten sowie schwierigen, verlustreichen und insbesondere kostspieligen Testläufen führt.

Eine Werkzeugmaschinensimulation stellt dabei bevorzugt den Verlauf des jeweiligen Werkstück-Bearbeitungsprozesses an einem digitalen Werkzeugmaschinenmodell nach. Zu diesem Zweck werden zumeist verschiedene mechanische Modelle, wie etwa Mehrmassenmodelle, geometrische Kinematik- oder Finite-Element-Modelle zur Beschreibung der physikalischen Eigenschaften und Wechselwirkungen der Maschinenelemente und Werkstücke genutzt und mit einer Steuerungssoftware zur Bewegung der Maschinenelemente kombiniert. Zudem kann auch die Prozesssimulation auf Basis einer Durchdringungsrechnung zwischen Werkstück und Werkzeug vorteilhaft verwendet werden.

In EP 1 901 149 B1 ist eine Maschinensimulation zur Festlegung eines Ablaufs für Bearbeitung eines Werkstücks an einer Werkzeugmaschine gezeigt, wobei insbesondere eine Datenstruktur in die Simulation integriert wurde, die es ermöglicht, durch Sensoren an realen Werkzeugmaschinen aufgenommene Daten bzw. Verhalten von Elementen zu integrieren und so die Steuerungsbeschreibung des implementierten Maschinenmodells weiter zu verbessern.

In WO 2012/168427 A1 ist zudem eine Maschinensimulation eines Arbeitsprozesses an einer Werkzeugmaschine unter Verwendung einer virtuellen Maschine gezeigt, in welcher durch CNC-gesteuerte Teilprozesse auf verschiedene, parallel zueinander agierende Prozessorkerne aufgeteilt und somit zur Beschleunigung der Simulationsabläufe parallelisiert berechnet werden können.

DE 11 2018 005 809 T5 offenbart eine Anpassung eines Maschinenmodells basierend auf einem Vergleich zwischen Signalen einer Maschine und des Maschinenmodells.

Bei den Simulationen von Werkzeugmaschinen innerhalb eines Werkzeug-Bearbeitungsprozesses nach dem Stand der Technik tritt jedoch jeher das Problem auf, dass eine genaue Angabe aller für die Simulation benötigten Zustandsparameter der Werkzeugmaschine, des genutzten Werkzeugs und/oder des Werkstücks, speziell der zeitliche Verlauf der physikalischen Eigenschaften letzterer, nicht ohne größten Aufwand möglich ist.

Eine Aufgabe der Erfindung ist es somit, ein Verfahren zur Simulation eines Bearbeitungsprozesses eines Werkstücks an einer Werkzeugmaschine und eine Vorrichtung für die Simulation eines solchen Bearbeitungsprozesses bereitzustellen, welche die vorstehend genannten Probleme aus dem Stand der Technik lösen und welche es insbesondere ermöglichen, das digitale Maschinenmodell innerhalb der Prozesssimulation möglichst effizient, kostengünstig und schnell an die Begebenheiten und Eigenschaften der realen Werkzeugmaschine anzugleichen und/oder dieses zu verbessern. Zudem ist es eine Aufgabe, die Anpassung der Simulation und damit einhergehenden Simulationsparameter so zu optimieren, dass sie möglichst automatisiert und somit unabhängig von menschlichen Fehleinschätzungen durchgeführt werden kann.

### Detaillierte Beschreibung der Erfindung

Zur Lösung der vorstehend genannten Aufgaben werden die Merkmale der unabhängigen Ansprüche vorgeschlagen. Die abhängigen Ansprüche betreffen bevorzugte Ausführungsbeispiele der vorliegenden Erfindung.

Die Erfindung gibt ein Verfahren und eine Vorrichtung zur Simulation eines Bearbeitungsprozesses eines Werkstücks an einer Werkzeugmaschine an, die dazu eingerichtet sind, anhand der Generierung von Simulationsdaten durch die in einem Simulationsabschnitt des Verfahrens durchgeführte Simulation des Bearbeitungs-prozesses an einem digitalen Maschinenmodell und dem in einem unabhängigen Fertigungsabschnitt des Verfahrens realisiertem Aufzeichnen von Bearbeitungsdaten des Bearbeitungsprozesses an der realen Werkzeugmaschine, Vergleichsdaten zwischen dem simulierten und dem realen Bearbeitungsprozess zu sammeln und zur Verbesserung der Effektivität der Simulation an eine in einem Analyseabschnitt des Verfahrens implementierte, künstliche Intelligenz (Kl) zuzuführen. Vorteilhaft wird als künstliche Intelligenz ein künstliches neuronales Netzwerk verwendet, und das Datenmodell zum Speichern der Simulationsdaten ist besonders vorteilhaft als zeitkontinuierliches Datenmodel ausgebildet.

Die Steuerung des digitalen Maschinenmodells und der realen Werkzeugmaschine werden in Abhängigkeit von zuvor definierten NC- und/oder PLC-Daten durchgeführt und der Analyseabschnitt ist so konfiguriert, dass er durch die Zuführung der Simulations- und Bearbeitungsdaten an der KI das Verhalten der Werkzeug-maschine, zumindest eines Werkzeugs und/oder des Werkstücks anlernt und Simulationsveränderungsparameter zur Veränderung und/oder Optimierung der Simulationseigenschaften als Ausgabedatensatz ausgibt (Ausgabe der KI zur Prozesskontrolle, Prognose und Optimierung) . Zudem kann insbesondere ein durch die KI modellierter Zustand zur Interpretation und Optimierung des tatsächlichen Werkzeugmaschinenzustandes herangezogen werden.

Durch die Erfindung, insbesondere aufgrund der (bevorzugt automatischen) Verbesserung der Simulation, auch Bearbeitungsprozesssimulation genannt, mittels selbstlernender KI , wird somit eine präzisere und gleichzeitig im Vergleich zum Stand der Technik kostengünstigere und effizientere Simulationsumgebung geschaffen, welche bevorzugt unabhängig agiert und somit keiner zusätzlichen Pausen- oder Wartezeiten bedarf. Zudem ermöglicht ein Auswerten und Interpretieren der so entstehenden Simulationsdaten eine vereinfachte und gleichermaßen genaue Optimierung des eigentlichen Werkzeugbearbeitungsprozesses, insbesondere da mögliche ineffiziente Einstellungen innerhalb der Werkzeugmaschine durch die Bearbeitungsprozesssimulation schnell und ohne Zuhilfenahme komplexer Sensorik erkannt und für den jeweiligen Arbeitsschritt angepasst werden können.

Bevorzugt kann es sich bei dem digitalen Maschinenmodell dabei bereits vor der Optimierung durch die KI um eine möglichst genaue Nachbildung der Werkzeug-maschine des Bearbeitungsabschnitts handeln, besonders bevorzugt einen digitalen Zwilling (digitales Abbild der realen Werkzeugmaschine), sodass eine Änderung des simulierten Bearbeitungsprozesses innerhalb des Simulationsabschnitts eine möglichst exakte Prognose über den Ausgang des Bearbeitungsprozesses an der Werkzeugmaschine ausgeben kann (Bearbeitungsprozessanalyse), insofern dieser die gleichen Veränderungen erfährt.

Zugleich kann die in dem Analyseabschnitt befindliche KI bevorzugt so konfiguriert sein, dass sie, anhand des oben genannten Anlernprozesses, Unterschiede zwischen dem Bearbeitungsprozess des digitalen Werkzeugmodells und der Werkzeugmaschine innerhalb des Bearbeitungsabschnitts erkennen und über die Ausgabe der Simulationsveränderungsparameter zur von einem Betreiber definierten, automatischen Verbesserung der Bearbeitungsprozesssimulation genutzt werden kann.

So kann die KI in einem bevorzugten Ausführungsbeispiel beispielsweise dazu eingerichtet sein, die Begebenheiten des simulierten Bearbeitungsprozesses über die Ausgabe der Simulationsveränderungsparameter an den Bearbeitungsprozess der Werkzeugmaschine anzupassen, sodass ein möglichst geringer Unterschied zwischen dem simulierten Bearbeitungsprozess und Bearbeitungsprozess an der Werkzeug-maschine realisiert wird. Dies hat insbesondere den Vorteil, dass durch eine genaue Anpassung des Simulationsprozesses nicht nur präzisere und somit für den jeweiligen Bearbeitungsprozess realitätsnähere Simulationsprognosen hergestellt werden, sondern diese gleichermaßen auch für eine genauere Optimierung des Bearbeitungs-prozesses an der Werkzeugmaschine genutzt werden können.

In einem weiteren bevorzugten Ausführungsbeispiel kann die KI zudem auch dazu konfiguriert sein, durch Anlernen des Verhaltens der Werkzeugmaschine, des zu bearbeitenden Werkstücks und verschiedenen Werkzeugen, zusätzlich die effizientesten Einstellungsvarianten von zukünftigen (oder aktuell durchgeführten, d.h. Bereitstellung der Optimierungsparameter in Echtzeit parallel zum aktuell ablaufenden realen Bearbeitungsprozess) Bearbeitungsprozessen (beispielsweise mittels Veränderung von Drehzahlen, Verfahrwegen, zu nutzenden Werkzeugen, Werkstückgeometrien oder Prozesstrajektorien) am Simulationsabschnitt zu prognostizieren. Mit anderen Worten kann somit mithilfe der KI eine Verbesserung der Bearbeitungsprozesssimulation vorzugsweise nicht nur durch Optimierung und/oder Angleichen bereits bestehender simulierter Prozesse, sondern ebenso durch ein dem Simulationsprozess vorangehendes (oder parallel zum realen Bearbeitungsprozess) Vorhersageverfahren ermöglicht werden. Dabei können die Simulationsdaten bevorzugt ebenso durch die innerhalb der Ausgabedatensatz integrierten Simulationsveränderungsparameter beschrieben werden, sodass zum einen bekannte Datenstrukturen in jedem Optimierungsverfahren erhalten bleiben und somit effizient genutzt, zum anderen jedoch auch eventuelle Einlaufzeiten des simulierten und/oder realen Bearbeitungsprozesses durch die von der KI generierten Prognose auf ein Minimum verkürzt werden können.

Der die Simulationsveränderungsparameter beinhaltende Ausgabedatensatz des Analyseabschnitts wird dem Simulationsabschnitt zur Optimierung der Bearbeitungsprozesssimulation, beispielsweise zur Angleichung des simulierten Bearbeitungsprozesses an den Bearbeitungsprozess der Werkzeugmaschine und/oder zur Prognose eines effizienten Prozessverlaufes, zurückgeführt, sodass vorzugsweise eine geschlossene Programmschleife entstehen und die jeweilige Simulation optimal konfiguriert werden kann.

Dabei kann die Einführung des Ausgabedatensatzes in den Simulationsabschnitt vorzugsweise so mit der Simulationssoftware verbunden sein, dass durch Integration des Ausgabedatensatzes des Analyseabschnitts in den Simulationsabschnitt zumindest ein Simulationsparameter, vorzugsweise jedoch alle von dem Analyseabschnitt als zu ändern deklarierten Simulationsparameter, angepasst werden. Zu diesem Zweck können die einzelnen Simulationsveränderungsparameter des Ausgabedatensatzes beispielsweise bevorzugt mit digitalen Simulationsmarkern versehen sein, welche bevorzugt innerhalb der Simulationssoftware eingelesen werden und der Simulationssoftware den Befehl geben, die entsprechend mit den Simulationsmarkern verbundenen Simulationsparameter auf die als Simulationsveränderungsparametern gespeicherten Werte zu setzen. Vorteilhaft kann das künstliche neuronale Netzwerk zudem konfiguriert sein, die Simulationsparameter der Simulation des Bearbeitungsprozesses so zu optimieren, dass sich ein möglichst minimaler Unterschied zwischen den ausgewählten Prozessparameter der Bearbeitungsdaten und den Simulationsdaten ergibt.

Die Simulationsveränderungsparameter des Ausgabedatensatzes können hierbei verschiedene, vorzugsweise alle zu verändernden Simulationsparameter der Simulationssoftware, wie etwa Geometrien von Werkzeugausstattungen oder -Maschinenelementen, Schleif- oder Schnittkonditionen, Trajektorien oder physikalische Eigenschaften (Temperatur, Elastizität, Reibungskoeffizienten, etc.) von Maschinen- oder Werkstückelementen, jedoch auch vollständige Befehlsketten oder grundlegende Einstellungsänderungen, beispielsweise die Auswahl des jeweiligen Maschinenmodells, beinhalten, wodurch der künstlichen Intelligenz zur Optimierung der Simulation die maximale Anzahl an Freiheitsgraden zur Verfügung gestellt wird. Gleichermaßen können die Ausgabedaten des Analyseabschnitts vorzugsweise gleiche Datenformate wie die Simulationsdaten des Simulationsabschnitts und die Bearbeitungsdaten des Fertigungsabschnitts besitzen, sodass die Ein- und Auslesegeschwindigkeit der jeweiligen Geschwindigkeit durch das Wegfallen möglicher Parser optimal genutzt werden kann.

In einem besonders bevorzugten Ausführungsbeispiel kann zudem die Programmschleife, welche zumindest die Simulation des Bearbeitungsprozesses, das Zuführen der Simulationsdaten in den Analyseabschnitt, das Einführen des Ausgabedatensatzes in den Simulationsabschnitt und die Einstellung der Simulationsparameter anhand des Ausgabedatensatzes umfasst, iterativ und bevorzugt automatisch durchlaufen werden, wobei die Anzahl n an Iterationsschritten zumindest n ≥ 1 betragen kann. Dabei kann, wie oben beschrieben, in jeder Iteration vorzugsweise ein neuer Bearbeitungsprozess, beispielsweise mit einem veränderten Werkstück und/oder Werkzeugen bzw. Werkzeugeinstellungen, innerhalb des Simulationsabschnitts ausgeführt, der KI angelernt und durch diese angepasst werden, wodurch ein sich im jeden Iterationsschritt stetig weiterentwickelndes Optimierungsverfahren generiert werden kann.

Die wesentlichen Prozessschritte innerhalb einer Iteration der Programmschleife und untereinander können hierbei als fließendes Verfahren verstanden werden, und sie können vorzugsweise zunächst mit der Übermittlung des Ausgabedatensatzes anhand der angelernten Informationen der KI an den Simulationsabschnitt beginnen, wodurch anhand der in dem Ausgabedatensatz implementierten Simulationsveränderungsparameter die Simulationsparameter vorab der eigentlichen Simulation optimiert werden können. In einem nächsten Schritt kann daraufhin die Simulation des jeweiligen Bearbeitungsprozesses durchlaufen und so erhaltene Ergebnisdaten als Prozessparameter zum Anlernen der KI an den die künstliche Intelligenz beinhaltenden Analyseabschnitt zugeführt werden. Letzteres kann dabei vorzugsweise so durchgeführt werden, dass sowohl die Prozessparameter des Simulationsabschnitts als auch im Bearbeitungsabschnitt an der Werkzeugmaschine generierte Prozessparameter im Analyseabschnitt aufgenommen, diese miteinander verknüpft und daraufhin als zum Anlernen der KI genutzte Eingabeparameter direkt an die KI übermittelt werden. Eine solche Programmschleife ermöglicht somit eine durch jede weitere Bearbeitungsprozesssimulation vollzogene, verbesserte Optimierungsfähigkeit des Systems, da die KI stetig neue Informationen über die Werkzeugmaschine, die Werkstücke und das Werkzeug erhält und diese anlernt.

Die Reihenfolge und Wirkungsweise der genannten Prozessschritte ist jedoch nicht auf das genannte Ausführungsbeispiel beschränkt. So kann beispielsweise bevorzugt zunächst auch die Bearbeitungsprozesssimulation als erster Schritt durchgeführt und die so erhaltenen Prozessparameter der KI zum Beispiel als "Ist-Wert" der aktuellen Simulation zugeführt werden, welche dieser wiederum interpretieren und durch Übergabe der Ausgabedaten an den Simulationsabschnitt optimieren kann.

Gleichermaßen kann der Optimierungsprozess vorzugsweise auch unabhängig vom Bearbeitungsprozess innerhalb des Bearbeitungsabschnitts bzw. an der Werkzeug-maschine durchgeführt werden. So kann in einem besonders bevorzugten Ausführungsbeispiel die KI zum Beispiel auch nur die in früheren Anlernphasen erhaltene Information/Wissen über die Werkzeugmaschine, die Werkstücke und die Werkzeuge nutzen und so die jeweilige Simulation nach den Wünschen des Betreibers/Anwenders optimieren. Zusätzliche Prozessparameter des Bearbeitungsabschnitts können beispielsweise durch einen später oder früher durchgeführten Bearbeitungsprozess an der Werkzeugmaschine, jedoch auch bereits vor oder nach der zugeordneten Simulation generiert werden, sodass das Anlernen der KI auch bereits vor der eigentlichen Simulation vollendet oder zu späteren Zeitpunkten erweitert werden kann, wodurch sich eine maximale Flexibilität des angegebenen Optimierungsprozesses ergibt.

Die Prozessparameter der Simulations- und Bearbeitungsdaten können sich dabei vorzugsweise so von den Simulationsparametern der Bearbeitungsprozesssimulation unterscheiden, dass sie lediglich den Bearbeitungsprozess betreffende Angaben, d.h. Eigenschaften der eigentlichen (realen) bzw. simulierten Werkzeugmaschine, der genutzten Werkzeuge und des Werkstücks beinhalten, bevorzugt jedoch nicht, zumindest im Falle der Prozessparameter der Simulationsdaten, über übergeordnete Simulationseinstellungen (bspw. Angaben des Simulationsmodells oder genutzter Simulationsfunktionen). Somit stehen der KI zum Anlernen und Optimieren der Simulation in diesem Fall, äquivalent zu Bearbeitern in einem manuellen Optimierungsprozess, lediglich auch an der Werkzeugmaschine messbare Lernparameter zur Verfügung, was die Entstehung von artifiziellen Fehlern oder Fehlentscheidungen ersterer auf ein Minimum reduziert.

Bevorzugt können die Simulationsdaten zudem so generiert sein, dass zumindest zu jedem Prozessparameter der Bearbeitungsdaten ein gleichbedeutender Prozessparameter in den Simulationsdaten existiert bzw. generiert oder aus einzelnen Prozessparametern innerhalb der Simulationsdaten hergeleitet werden kann, wodurch die Anzahl an für die KI zu nutzender Anlernparameter weiter maximiert und dieser somit möglichst variabel trainiert werden kann. In einem besonders bevorzugten Ausführungsbeispiel der Erfindung können die Datensätze einzelner Prozessparameter in den Simulations- und Bearbeitungsdaten auch zeitabhängig vorliegen, wobei sinngemäß zu jedem Zeitpunkt des Prozessparameters der Bearbeitungsdaten vorzugsweise zumindest ein entsprechender Prozessparameter innerhalb der Simulationsdaten existiert und dem Prozessparameter der Bearbeitungsdaten zugeordnet werden kann.

Die beschriebene Verknüpfung der Prozessparameter des Simulationsabschnitts mit den Prozessparametern des Bearbeitungsabschnitts, jedoch auch die generelle Generierung der Simulationsdaten durch die Bearbeitungsprozesssimulation, besitzt darüber hinaus den Vorteil, dass diese nicht nur als Vergleichsdaten zum Anlernen der KI genutzt werden können, sondern gleichermaßen vorzugsweise direkte Rückschlüsse auf den (bspw. aktuell ablaufenden) Bearbeitungsprozess an der Werkzeugmaschine ermöglichen. So kann ein Anwender/Mitarbeiter bevorzugt mithilfe aus der Simulation generierter Daten, beispielsweise Abnutzungs-, Temperatur- oder Bewegungsdaten einzelner Maschinen- oder Werkstückelemente, auch Fehler oder Fehleinstellungen an der Werkzeugmaschine erkennen und somit mithilfe der (bspw. zeitlich parallel ablaufenden) Bearbeitungsprozesssimulation direkte Handlungsmaßnahmen zur Optimierung des Bearbeitungsprozesses ergreifen. Mit anderen Worten können die genannten Optimierungsprozesse durch die KI somit nicht nur zur Analyse und/oder zur präziseren Simulation des Bearbeitungsprozesses genutzt werden, sondern dienen auch dazu, die Werkzeugmaschine des Bearbeitungsabschnitts dahingehend zu optimieren, dass der Bearbeitungsprozess effizienter und mit höherer Qualität durchlaufen werden kann.

In einem besonders bevorzugten Beispiel können diese Handlungsmaßnahmen zudem auch vollautomatisch, vorzugsweise durch eine Rückkopplung zwischen dem Simulationsabschnitt und dem Bearbeitungsabschnitt, erfolgen und so als weiterführender Optimierungsprozess der KI angesehen werden. So können vorzugsweise sowohl am Bearbeitungsabschnitt als auch am Simulationsabschnitt vorliegende Prozessparameter (zum Beispiel PLC und/oder NC-Daten, Werkzeugauswahlen oder -Drehzahlen) auch zeitabhängig, bspw. vom Simulationsabschnitt zur Werkzeugmaschine übertragen und zur verbesserten Ansteuerung der Werkzeugmaschine innerhalb des Bearbeitungsprozesses genutzt werden. In einem weiteren Ausführungsbeispiel kann die Übertragung dieser Prozessparameter ferner auch direkt mithilfe der Ausgabedatei der KI vollzogen werden. Mit anderen Worten kann die KI bevorzugt auch so konfiguriert sein, dass es durch Implementierung der Ausgabedatei in den Bearbeitungsabschnitt und den Simulationsabschnitt sowohl den Bearbeitungsprozess an der Werkzeugmaschine, als auch das digitale Maschinenmodell ansteuern und somit zeitgleich optimieren kann. Ein solches Verfahren kann somit nicht nur den Bearbeitungsprozess auf Grundlage vorheriger Arbeitsprozesse eigenständig verbessern und hierdurch, je nach Trainingsgrad der KI, den Zeit- und Kostenaufwand des Optimierungsprozesses auf ein Minimum reduzieren, sondern auch ein digitales Maschinenmodell gewährleisten, aus welchem eine Vielzahl von für den Bearbeitungsprozess signifikanten Informationen entnommen werden kann.

Zur weiteren Verbesserung des Verfahrens können die Prozessparameter des Simulations- und Bearbeitungsabschnitts zudem bevorzugt auch nach Generation am jeweiligen Fertigungs- oder Simulationsabschnitts bzw. vor dem Zuführen in den Analyseabschnitt in einem dafür vorgesehenem Datenspeicher abgespeichert werden, wobei die entsprechenden Simulationsdaten bevorzugt einer in der Iterationsschleife implementierten Simulationsdatenbank und die Prozessparameter des Fertigungsabschnitts einer separaten bzw. unabhängig zum Simulationsablauf gelegenen Fertigungsdatenbank hinzugefügt und für den jeweiligen Betreiber als einsehbar deklariert werden. Dies besitzt insbesondere den Vorteil, dass der Betreiber auch zu späteren Zeitpunkten, bspw. nach weiteren Anlern- und/oder Optimierungsiterationen, noch die Ergebnisse früherer Kl-Entscheidungen betrachten, gegebenenfalls bewerten und zur Nutzung von bestimmten Bearbeitungsprozess-Verbesserungen bzw. -Veränderungen nutzen kann. Ferner ermöglicht das Zwischenspeichern der einzelnen Prozessparameter in die jeweiligen Datenbanken ein mögliches Zurücksetzen der KI in frühere Lernstadien im Falle von fehlerhaften oder nicht zufriedenstellenden Ergebnisparametern.

Zum Anlernen und Optimieren des Bearbeitungsprozesses mittels der KI können ferner eine Anzahl von Prozessparameter des Simulationsabschnitts und des Fertigungsabschnitts, vorzugsweise aus der Simulations- und der Fertigungsdatenbank, in den Analyseabschnitt eingeführt werden, in dem sie mittels Vergleich in einzelne, der KI angepasste Eingabeparameter umgewandelt und letzteren zugeführt werden. Dabei sind die Eingabeparameter bevorzugt nicht allein auf die Prozessparameter per se bzw. deren direktem Vergleich zwischen dem im Bearbeitungsabschnitt praktizierten und simulierten Bearbeitungsprozess beschränkt, sondern können beispielsweise ebenso aus der Kombination mehrerer Prozessparameter, auf den Prozessparametern basierenden mechanischen, ökonomischen oder qualitativen Bewertungen oder mit diesen zusammenhängende Funktionen darstellen, um die KI frei nach den jeweiligen Wünschen des Betreibers anlernen und zur Optimierung der Bearbeitungsprozesssimulation nutzen zu können.

Des Weiteren kann der Analyseabschnitt vorzugsweise zum Generieren dieser Eingabeparameter eine Mehrzahl von Bearbeitungssegmenten, zumindest aber einen Datenverknüpfungsabschnitt und einen Dateninterpretationsabschnitt, aufweisen, welche dem der Eingabe in die KI bevorzugt vor- oder parallel geschaltet sind. Dabei kann der Datenverknüpfungsabschnitt vorzugsweise so konfiguriert sein, dass er die in der Fertigungsdatenbank und Simulationsdatenbank gespeicherten Simulations- und Bearbeitungsdaten erhält, entsprechend vergleichbare Prozessparameter sucht und sie zunächst als Datenbündel verknüpft und an den Dateninterpretationsabschnitt übergibt, wobei eine Verknüpfung entsprechender Simulations- und Bearbeitungsdaten durch kontinuierliches Datenmapping realisiert wird. Insbesondere kann dabei ein zeitkontinuierliches Mappingverfahren genutzt werden. Das Mapping findet über die Zuordnung der durchgeführten Operationen/Bearbeitungsschritte, der NC-Zeile und/oder der Achsposition statt. Der Dateninterpretationsabschnitt wiederum kann in einem besonders bevorzugten Ausführungsbeispiel diese gegenübergestellten bzw. verknüpften Simulations- und Bearbeitungsdaten daraufhin analysieren, mit anderen Datenbündeln vergleichen und aus ihnen eine beliebige Anzahl an Eingabeparameter für die KI generieren, welche er ebenso an die künstliche Intelligenz weitergibt. Mithilfe solcher, vorzugsweise unabhängig voneinander agierender Bearbeitungssegmente lässt sich somit ein optimiertes und insbesondere schnelles Verfahren zur iterierten Zuführung der Eingabeparameter in die KI realisieren, welches beispielsweise durch eine bevorzugt zusätzliche Eingabeschnittstelle über einen zur Ansteuerung der Bearbeitungssegmente zu implementierenden Code frei für den jeweiligen Betreiber eingestellt werden kann.

Die die Eingabeparameter letztlich erhaltene künstliche Intelligenz kann darüber hinaus direkt mit der Ausgabe der Bearbeitungssegmente verbunden und vorzugsweise als Clusterverfahren, Support Vector Maschine oder besonders bevorzugt als künstliches neuronales Netzwerk ausgebildet sein. Letzteres kann dabei ferner vorzugsweise in einer typischen, auch innerhalb des Analyseabschnitts veränderbaren Netzwerkstruktur, beispielsweise einem ein- oder mehrschichtigem feed-forward oder rekurrenten Netzwerk, vorliegen, sodass je nach Komplexität des zu optimierenden Bearbeitungsprozesses ein optimales Verbesserungsverfahren gewählt werden kann. Zur Optimierung des simulierten Bearbeitungsprozesses kann ferner ein beliebiger Lern-Algorithmus des künstlichen neuronalen Netzwerks mit gewünschten Aktivierungsfunktionen implementiert sein, wobei dieser vorzugsweise jedoch zumindest so eingerichtet ist, dass es durch die mithilfe des künstlichen neuronalen Netzwerks entstehenden Simulationsveränderungsparameter bzw. Simulationsparameter letztlich zu der gewünschten Optimierung der Bearbeitungsprozesssimulation, beispielsweise durch Anpassung der Simulation an die Begebenheiten an der Werkzeugmaschine oder gezielten Einstellungsprognosen neuer Prozesssimulationen, kommt.

Wie bereits genannt besitzt der Einsatz der KI zur Optimierung des simulierten Bearbeitungsprozesses hierbei den Vorteil, dass dieses variabel auf das jeweilige Problem bzw. die jeweiligen Präferenzen des Betreibers angepasst und während des Optimierungsprozesses ohne Zutun einer menschlichen Arbeitskraft betrieben werden kann, wodurch sich insbesondere entsprechende Zeit- und Arbeitskosten minimieren lassen. Darüber hinaus ergeben sich jedoch auch weitere Zweckdienlichkeiten: so kann in einem besonders bevorzugten Ausführungsbeispiel das Anlernen der KI und das Optimieren des Simulationsprozesses durch die KI auch parallel und/oder unabhängig vom jeweiligen, realen Bearbeitungsprozess an der Werkzeugmaschine durchgeführt werden, was zu weiteren Zeiteinsparungen führen kann. Im gleichen Sinne kann der Trainingsvorgang der KI auch so konfiguriert sein, dass dieser in einem dem Simulations- und Bearbeitungsprozess vorangehenden Segment vollzogen wird, beispielsweise indem ihm bereits vor Bearbeitungsstart eine Mehrzahl von Trainingsdatensätzen zur Verfügung gestellt wird. Insbesondere lassen sich auf diese Art auch bereits antrainierte Netzwerke für multiple Prozesssimulationen nutzen, da die Trainingsdaten natürlicherweise nicht zwingend abhängig von der Struktur der jeweiligen Werkzeugmaschine bzw. des jeweiligen Bearbeitungsprozesses sein müssen und somit eine optimale Grundlage für spezifischere Lernphasen bieten können. Somit kann das künstliche neuronale Netzwerk in einem dem Simulations- und Bearbeitungsprozess vorangehenden Trainingsvorgang mit Trainingsdatensätzen trainiert werden.

In einem weiteren bevorzugten Ausführungsbeispiel kann die KI zudem die hervorgebrachten Ausgabedatensätze in eine erweiterbare Technologiedatenbank einspeichern, in welcher die eingeführten Simulationsveränderungsparameter ebenso sowohl eingesehen als auch zur KI zurückgeführt werden können. So ergibt sich auch hier zum einen die Möglichkeit, dass ein Betreiber die in jeder Iteration hervorgerufenen Simulationsdaten anhand der Simulationsveränderungsparameter nachvollziehen und diese in zweckdienlichen Fällen weiterverwenden kann; letztere jedoch zum anderen auch bevorzugt dafür genutzt werden können, die oben genannten Lern- und Optimierungsprozesse, beispielsweise durch erneutes Hinzufügen einzelner Simulationsveränderungsparameter in ein rekurrentes Netzwerksystem, nochmals zu verbessern. Darüber hinaus können bevorzugt zumindest die Technologiedatenbank, die Simulationsdatenbank und die Fertigungsdatenbank in einem externen System, beispielsweise einer Cloud oder einem externen Netzwerk, gelegen sein, sodass der Betreiber oder Hersteller, jedoch auch außenstehende Mitarbeiter effizient auf die gespeicherten Daten zurückgreifen und diese beispielsweise für weitere Bearbeitungs- oder Änderungsprozesse bevorzugt für eine Vielzahl von Werkzeugmaschinen nutzen können.

Zur Sicherstellung allgemein gleicher Maßgaben des Bearbeitungsprozesses innerhalb des Simulations- und des Fertigungsabschnitts können die beiden Verfahrensabschnitte zudem weitere Eigenschaften umfassen. Beispielsweise kann das innerhalb des Simulationsabschnitts implementierte digitale Maschinenmodell bevorzugt die gesamte Geometrie der Werkzeugmaschine, der genutzten Werkzeuge und des zu bearbeitenden Werkstücks komplett, zumindest jedoch die für den entsprechenden Bearbeitungsprozess benötigten Teile gemäß ihrem realen Äquivalent ausbilden. Darüber hinaus werden die zur Steuerung der einzelnen Maschinenelemente der Werkzeugmaschine genutzten NC-Daten und/oder PLC-Daten in gleicher Form zur Bewegung der simulierten Elemente des digitalen Maschinenmodells genutzt, sodass in der bestmöglichsten Form eine exakte, digitale Kopie der realen Werkzeugmaschine innerhalb des Simulationsabschnitts vorliegt.

Ein solches, bereits zuvor als digitalen Zwilling beschriebenes Maschinenmodell besitzt dabei insbesondere den Vorteil, dass jegliche Eigenschaften bzw. Ergebnisse der Bearbeitungsprozesssimulation direkt mit den Daten der realen Werkzeug-maschine verglichen werden können. Darüber hinaus kann die Simulation des Bearbeitungsprozesses an einem solchen Modell vorzugsweise auch physikalische Parameter, z.B. Temperatur, Elastizität, Reibungskoeffizienten, etc., der Werkzeug-maschine bzw. der Werkzeuge und/oder des zu bearbeitenden Werkstücks ausgeben, welche sich in der Realität nur schwer oder mit größerem Aufwand ermitteln lassen, und somit eventuelle Probleme innerhalb des Bearbeitungsprozesses schnell und effizient identifizieren kann. Speziell aus diesem Grund kann das digitale Maschinenmodell deshalb auch bevorzugt zumindest zeitabhängige Datenreihen dieser physikalischen Parameter ausgeben, welche beispielsweise über zusätzliche, an den Datenreihen angeknüpfte Zeit- und Positionsmarker abhängig zum Zeitpunkt des jeweiligen Bearbeitungsprozesses und/oder des jeweiligen Arbeitsschrittes definiert und als Prozessparameter ausgegeben werden können.

Um gleichzeitig die Vergleichbarkeit des digitalen Maschinenmodells und der realen Werkzeugmaschine weiter zu verbessern, kann zudem vorzugsweise innerhalb und/oder nach dem Bearbeitungsprozess an der realen Werkzeugmaschine eine während eines Produktanalyseabschnitts geschehene Analyse der Elemente der Werkzeugmaschine, des Werkstücks und/oder der jeweilig genutzten Werkzeuge erfolgen, welche beispielsweise durch an der Werkzeugmaschine implementierte Sensoren oder extern gelagerte Analyseeinheiten realisiert werden kann. Auch hier werden die gesammelten Daten bevorzugt als Prozessparameter definiert und in die oben genannte Fertigungsdatenbank gespeichert.

Ferner können die oben genannten und zur Definierung des digitalen Maschinenmodells und der realen Werkzeugmaschine genutzten NC- und/oder PLC- und Geometriedaten der Verfahrensentwicklung entsprechend bevorzugt in einem vor dem Bearbeitungsprozess befindlichen Eingabedatenvorverarbeitungsabschnitt angepasst werden. So können beispielsweise zumindest die durch die NC- und/oder PLC-Daten definierten Arbeitsschritte des Bearbeitungsprozesses an der Werkzeugmaschine und am digitalen Maschinenmodell vorzugsweise zunächst an einem vorgeschaltetem CAD/CAM-System generiert und als Operationsdatei von dem CAD/CAM-System zu dem zuletzt genannten Eingabedatenvorverarbeitungsabschnitt überführt werden, wobei unter einer Operationsdatei ein allgemeines Datenpacket mit Informationen beispielsweise über die Maschinen-, Werkzeug- und Werkstückgeometrie, den Bewegungsablauf der einzelnen Elemente und/oder Identifikationsstrukturen wie etwa UUIDs, zu verstehen ist. Je nach Datenformat der Operationsdatei kann der Eingabedatenvorverarbeitungsabschnitt zudem über einen oder mehrere Parser verfügen, über welche erstere vor der Weiterverarbeitung in ein geeignetes Eingangsformat überführt und der Eingabedatenvorverarbeitungsabschnitt somit selbst unterschiedlich formatierte und/oder extern generierte Operationsdateien bearbeiten kann.

Bevorzugt kann darauf die in dem CAD/CAM-System entwickelte Operationsdatei innerhalb des Eingabedatenvorverarbeitungsabschnitts in ein NC-Datenformat umgewandelt und an den Fertigungsabschnitt bzw. mit den entsprechenden ebenso umformatierten Fertigungs- und Zustandsdaten der zu simulierenden Werkzeug-maschine, des Werkzeugs und/oder des zu bearbeitenden Werkstücks an den Simulationsabschnitt übertragen werden. Dies hat insbesondere den Vorteil, dass die Umformatierung der Operationsdatei unabhängig von dem jeweiligen Simulationszyklus geschehen kann und somit diesen nicht unnötigerweise behindert oder verlangsamt.

Zudem kann auch hier infolge der Umformatierung der Operationsdatei in das NC-Format zur Identifizierung des jeweiligen Arbeitsschrittes bevorzugt ein zusätzlicher Schrittmarker in die NC-Daten eingefügten werden, sodass die reale Werkzeug-maschine und das digitale Werkzeugmaschinenmodell, beispielsweise mithilfe eines Steuerungsmodels, den Schrittmarker innerhalb des Bearbeitungs-prozesses interpretieren und so während des Bearbeitungsprozesses nachvollziehen können, in welchem Arbeitsschritt sich die (digitale) Werkzeugmaschine derzeitig befindet.

In einem weiteren bevorzugten Ausführungsbeispiel können die zuvor in den NC-Daten gespeicherten Arbeitsschritte darüber hinaus auch zur Interpretation in anderen Simulationssystemen zusätzlich als umformatierte Strukturdatei, beispielsweise aus dem Eingabedatenvorverarbeitungsabschnitt als XML oder STEP-Datei, ausgegeben werden, wodurch der zuvor genannte Formatierungsprozess auch beim Wechseln der jeweiligen Simulations-Engine weiter genutzt und somit unabhängig vom Simulationsprozess gesehen werden kann. Gleichermaßen können hingegen die Werkzeug-maschine und das digitale Maschinenmodell bevorzugt ebenso so konfiguriert sein, dass diese Arbeitsschritte und/oder Prozessinformationen, beispielsweise über ein weiteres Parsermodul, aus anderen Datenformaten entnommen und zur Übernahme und Implementation der jeweiligen enthaltenen Arbeitsschritte interpretiert werden können, wodurch bevorzugt auch die Kommunikation mit anderen Simulationsnetzwerken oder gar Parallel Processing von unterschiedlichen Simulationen ermöglicht werden kann.

Zusammenfassend lässt sich aufgrund der oben genannten Merkmale somit ein Verfahren zur Simulation einer Bearbeitung an einer Werkzeugmaschine mittels einer selbstlernenden, künstlichen Intelligenz realisieren, in welchem die Simulation zur Analyse und Verbesserung von genutzten Bearbeitungsprozessen an Werkzeugmaschinen, mithilfe eines Anlernprozesses der KI durch zugleich von Simulations- als auch Werkzeugmaschinendaten basierenden Vergleichsdaten, optimal an die Eigenschaften des jeweilig real ablaufenden Bearbeitungsprozesses angepasst und so selbst zur Prognose von noch zu entwickelnden Bearbeitungs-prozessen genutzt werden kann. Dabei umfasst der Optimierungsprozess der Simulation bevorzugt vorrangig die Durchführung der Simulation des Bearbeitungsprozesses an einem in einem Simulationsabschnitt implementierten, digitalen Maschinenmodell, die Übergabe der Simulationsergebnisse als Prozessparameter in die in einem Analyseabschnitt gelegene, künstliche Intelligenz, das Anlernen der künstlichen Intelligenz anhand dem Vergleich der Prozessparameter des Simulationsabschnitts mit denen einer Werkzeugmaschine, und das Zurückführen zu ändernder Simulationsparameter an den Simulationsabschnitt durch eine von der KI generierte Ausgabedatei. Die benötigten Optimierungsschritte können dabei ferner unabhängig bzw. parallel zum jeweiligen Bearbeitungsprozess an der realen Werkzeugmaschine durchgeführt und nach Anlernen der KI, welches ebenso vor der eigentlichen Fertigung vollzogen werden kann, vollautomatisiert realisiert werden. Darüber hinaus besitzt das Verfahren den Vorteil, dass zur Steuerung sowohl der realen Werkzeugmaschine als auch des digitalen Maschinenmodells die identischen NC-, und im Falle der Simulation auch Geometriedaten, genutzt werden, wodurch die Generierung einer exakten digitalen Kopie des realen Bearbeitungsprozesses ermöglicht und durch zusätzliche Analysen an der Werkzeugmaschine, des Werkstücks und der genutzten Werkzeuge unterstützt wird.

Entsprechend kann zudem eine entsprechende Vorrichtung realisiert werden, die die oben genannten Merkmale erfüllen und zur Simulation des Bearbeitungsprozesses eines Werkstücks an einer Werkzeugmaschine mittels einer selbstlernenden, künstlichen Intelligenz genutzt werden kann.

Diese Vorrichtung umfasst deshalb zumindest eine Werkzeugmaschine zur Bearbeitung des jeweiligen Werkstücks mithilfe der zuvor genannten NC-Daten, eine gegenüber der Werkzeugmaschine unabhängig ansteuerbare Simulationsvorrichtung, beispielsweise ein Großrechner oder ein Server, zur Simulation des Bearbeitungs-prozesses an einem digitalen Maschinenmodell sowie eine mit der Werkzeugmaschine und der Simulationsvorrichtung verbundene Analyseeinheit, welche mittels implementierter künstlicher Intelligenz zur Anpassung von Simulationsparametern innerhalb der Simulationsvorrichtung konfiguriert ist, das Verhalten der Werkzeug-maschine, des genutzten Werkstücks und/oder der Werkzeuge anzulernen und deren Ergebnisse mithilfe eines Ausgabedatensatzes auszugeben. Ferner ist die Werkzeug-maschine eingerichtet, die innerhalb oder nach dem Bearbeitungsprozess generierten Bearbeitungsdaten, äquivalent zu den durch den in der Simulationsvorrichtung entwickelten Simulationsdaten, in die Analyseeinheit zu übertragen, wodurch sich zwischen der Analyseeinheit und der Simulationsvorrichtung die zuvor genannte Programm- bzw. Iterationsschleife ergeben kann.

Ebenso äquivalent können zudem zumindest die Analyseeinheit und die Simulationsvorrichtung zur separaten Optimierung der Prozesssimulation bevorzugt unabhängig von dem Bearbeitungsprozess der Werkzeugmaschine agieren, sodass über die zuvor genannte Programmschleife auch mehrere Optimierungsvorgänge bzw. durch die KI angeleitete Simulationsvorgänge iterativ durchgeführt werden können, diese jedoch optional auch zu jeder Zeit mit Prozessparametern der Werkzeug-maschine, bspw. über einen Zugang zu der entsprechenden Datenbank, mit weiteren Informationen erweitert werden können.

Zur Informationsübertragung zwischen den einzelnen Vorrichtungselementen können dabei die Werkzeugmaschine, die Simulationsvorrichtung und die Analyseeinrichtung weiterhin bevorzugt so konfiguriert sein, dass sie unabhängig voneinander Daten, insbesondere die genannten Simulations- und Bearbeitungsdaten sowie die von der Analyseeinrichtung generierte Ausgabedatei, aber auch Hardware und/oder Programmdaten untereinander übertragen und diese bevorzugt auch in entsprechende Datenspeicher oder einen zentral gelegenen Speicherserver einlagern können, sodass der Simulations- und Optimierungsprozess optimal durchgeführt werden kann. In einem besonders bevorzugten Ausführungsbeispiel kann diese Übertragung beispielsweise mittels eines Intranets und/oder eines Internets erfolgen.

### Kurzbeschreibung der Figuren

- **Figur 1**:: zeigt eine Netzwerkdarstellung eines ersten Ausführungsbeispiels des angegebenen Verfahrens
- **Figur 2**:: zeigt eine Netzwerkdarstellung eines Ausführungsbeispiels des Analyseabschnitts des angegebenen Verfahrens
- **Figur 3A**:: zeigt eine Netzwerkdarstellung eines Ausführungsbeispiels des künstlichen neuronalen Netzwerkes des Verfahrens
- **Figur 3B:**: zeigt eine Netzwerkdarstellung des Anlernprozesses eines künstlichen Neurons des künstlichen neuronalen Netzwerkes der Figur 3A
- **Figur 4:**: zeigt ein Flussdiagramm des Ablaufvorgangs des Anlernprozesses der künstlichen Intelligenz (maschinellen Lernvorrichtung)
- **Figur 5:**: zeigt ein Flussdiagramm des Betriebsablaufes des Simulationsabschnitts
- **Figur 6:**: zeigt eine Netzwerkdarstellung eines zweiten Ausführungsbeispiels des angegebenen Verfahrens
- **Figur 7:**: zeigt eine beispielhafte Auflistung zu entnehmender Parameter aus der virtuellen und realen Werkzeugmaschine

### Detaillierte Beschreibung bevorzugter Ausführungsformen

Im Folgenden werden Ausführungsbeispiele der vorliegenden Erfindung anhand beispielhafter Figuren detailliert beschrieben.

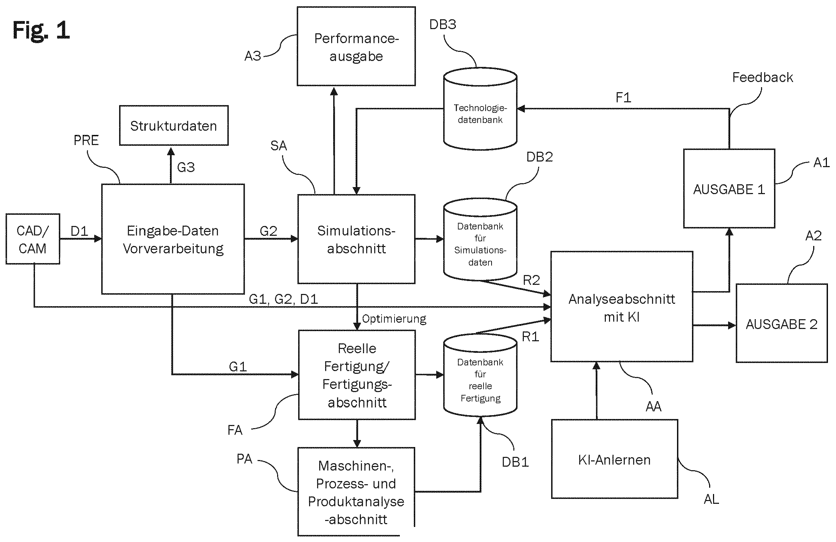

Figur 1 zeigt ein erstes, vereinfachtes Ausführungsbeispiels des zur Erfindung gehörenden Verfahrens zur Simulation des Bearbeitungsprozesses eines Werkstücks an einer NC-gesteuerten Werkzeugmaschine mittels selbstlernender, künstlicher Intelligenz AAKI (insbesondere künstlichem neuronalem Netzwerk) in einer Netzwerkdarstellung. Dabei wird zunächst über ein CAD/CAM-System die geometrische Struktur der in einem digitalen Maschinenmodell nachzubildenden Werkzeugmaschine samt genutzten Werkstücken und Werkzeugen sowie die zum Bearbeitungsprozess benötigten Arbeitsschritte definiert und innerhalb einer Operationsdatei D1 an einen Eingabedatenvorverarbeitungsabschnitt PRE überführt. Hierbei kann die Operationsdatei D1 bereits als NC-Datei vorliegen bzw. die beinhaltenden Arbeitsschritte innerhalb des CAD/CAM-Systems in ein NC-Format umgewandelt worden sein, jedoch lassen sich nicht zuletzt durch eine Reihe von in dem Eingabedatenvorverarbeitungsabschnitt PRE implementierten Parsern auch jegliche anderen Dateiformate in den Eingabedatenvorverarbeitungsabschnitt PRE einlesen und interpretieren.

Innerhalb des Eingabedatenvorverarbeitungsabschnitt PRE wird daraufhin die Operationsdatei D1 nach ihren funktionalen Bestandteilen, d.h. beispielsweise den geometrischen Daten der Werkzeugmaschine, der genutzten Werkzeuge und Werkstücke sowie die der jeweiligen Arbeitsschritte der zur Werkzeugmaschine zugehörigen Elementen aufgeteilt, diese analysiert und bestehende Arbeitsschritte, falls nötig, in eine NC-Datei G1 umformatiert. Darüber hinaus erhält zur verbesserten Identifizierung eines jeden Teilprozesses jeder registrierte Arbeitsschritt innerhalb der NC-Datei eine festgelegte UUID, welche während des Bearbeitungsprozesses von der jeweiligen Werkzeugmaschine bzw. dem digitalen Maschinenmodell abgefragt und so zur Identifizierung des gerade ablaufenden Bearbeitungsprozesses genutzt werden kann.

In einem nächsten Schritt erfolgt anschließend die Überführung der benötigten Informationsdateien in den dafür vorgesehenen Simulationsabschnitt SA bzw. Fertigungsabschnitt FA, welcher zugleich das Verfahren in einen realen (unterer Abschnitt des Netzwerks) und einen der Simulation zugehörigen Anteil (oberer Abschnitt des Netzwerks) unterteilt. Zur Steuerung der in dem Fertigungsabschnitt FA zu nutzenden realen Werkzeugmaschine wird zumindest die in dem Eingabedatenvorverarbeitungsabschnitt PRE formatierte NC-Daten zusammen mit weiteren für die Maschinensteuerung genutzten Programmdaten, wie etwa Identifier oder Sicherungsdateien, innerhalb einer Maschinendatei G1 von dem Eingabedatenvorverarbeitungsabschnitt PRE zum Fertigungsabschnitt FA exportiert, in welchem sie nach abermaliger Überprüfung mittels eines Maschinenbetreibers oder eines automatisierten Überprüfungsalgorithmus (nicht angezeigt), in die Werkzeugmaschine überführt wird. Dem die Simulationssoftware beinhaltenden Simulationsabschnitt SA wird hingegen mithilfe des Eingabedatenvorverarbeitungsabschnitts PRE eine gesonderte Simulationsinformationsdatei G2 übermittelt, welche neben der NC-Daten der Maschinendatei G1 zumindest auch die zusätzlich für die Erstellung des digitalen Maschinenmodells benötigten geometrischen Strukturdaten der Werkzeugmaschine sowie weitere Vorinformationen, wie etwa die physikalischen Eigenschaften einzelnen Maschinenelemente, des Werkstücks oder zu nutzenden Werkzeuge, beinhalten kann, sodass dem Simulationsabschnitt zumindest zum Starten der entsprechenden Simulation ausreichend Informationen bzw. Parameter vorliegen.

Darüber hinaus können einzelne innerhalb des Eingabedatenvorverarbeitungsabschnitts PRE bearbeitete Daten ebenso, falls gewünscht, beispielsweise mithilfe implementierter Compiler in ein anderes Datenformat, wie etwa XML oder STEP, umformatieren und diese zur Benutzung externer Simulationssoft- oder -Hardware, in ein separates Datenbündel G3 gespeichert werden, wodurch insbesondere ein direkter Vergleich verschiedener Simulations-Engine oder -aufbauten, nicht zuletzt jedoch sogar das parallele Simulieren an mehreren Simulationsabschnitten SA und damit das Beschleunigen des Simulationsprozesses anhand mehrerer gleichzeitig arbeitenden Prozessorkernen ermöglicht wird.

Ferner, dem realen Abschnitt des Verfahrens folgend, kann aufgrund der Zuführung der NC-Datei G1 an die Werkzeugmaschine nun der reale Bearbeitungsprozess im Fertigungsabschnitt FA in Betrieb genommen werden. Dabei besitzt jedoch der Verlauf dieses Prozesses keine zeitliche oder sonstige Abhängigkeit zum zuvor genannten, der Simulation des Bearbeitungsprozesses betreffenden Verfahrensabschnitt, sondern dient bevorzugt zur Generierung von für das Anlernen des künstlichen neuronalen Netzwerkes AAKI zu nutzenden Referenz- bzw. Prozessparameter. Gleichermaßen ist auch die Anzahl an vollzogenen Bearbeitungsprozessen innerhalb des Fertigungsabschnitts FA nicht fest definiert, sondern kann von dem Betreiber jederzeit manuell festgelegt und/oder zur genaueren Verifizierung einzelner Parameter zu einem späteren Zeitpunkt erhöht werden. Die Gewinnung letzterer kann dabei über eine Vielzahl von an der Werkzeugmaschine angebrachten oder externen Sensoren, jedoch auch durch manuelle Eingabe qualitativer Analyseprozesse, beispielsweise durch das Betrachten des fertigen Werkstücks durch einen Gutachter, innerhalb oder nach dem Bearbeitungsprozess in einem sogenannten Maschinen-, Prozess- und Produktionsanalyseabschnitt PA vollzogen werden, wobei die letztlich so erhaltenen und gebündelten Prozessparameter zunächst in eine für die reelle Fertigung vorgesehene Datenbank DB1 gespeichert und dann als Bearbeitungsdaten R1 an den mit dem künstlichen neuralen Netzwerk AAKI versehenen Analyseabschnitt AA weitergeleitet werden.

Äquivalent zum Fertigungsabschnitt des Verfahrens kann zudem bei Erhalt der Simulationsinformationsdatei G2 in die Simulation des Bearbeitungsprozesses betreffenden Verfahrensabschnitt der Start der Bearbeitungsprozesssimulation und somit auch der hiermit verbundene Optimierungs- und/oder Anlernprozess eingeleitet werden. So wird zunächst innerhalb des Simulationsabschnitts SA über die implementierte Simulationssoftware und mithilfe der Simulationsinformationsdatei G2 ein entsprechendes, der realen Werkzeugmaschine des Fertigungsabschnitts bestmöglich gleichendes, digitales Maschinenmodell samt Werkzeugen und Werkstücken erstellt, welches mithilfe der gleichermaßen erhaltenden NC-Daten durch den Bearbeitungsprozess gesteuert werden kann. Parallel zum realen Verfahrensabschnitt werden darüber hinaus etwaig zu nutzende Prozessparameter ebenso mithilfe von im Simulationsabschnitt SA integrierten Analysemodulen bestimmt und diese in einem bevorzugt zu den Bearbeitungsdaten gleichen Format von dem Simulationsabschnitt SA in eine separate Simulationsdatenbank DB2 gespeichert und als Simulationsdaten R2 an den Analyseabschnitt AA gesendet. Auch hier lassen sich dabei die Anzahl und die Art der ausgewählten Prozessparameter, je nach Nutzung und Ziel des Optimierungsprozesses, manuell auswählen und/oder zu den im realen Verfahrensabschnitt zu entnehmenden Prozessparametern anpassen, sodass je nach genutzter Werkzeugmaschine bzw. einzustellenden Bearbeitungsprozess der Optimierungsprozess und/oder Anlernprozess größtmöglich effizient genutzt werden kann.

Den Optimierungs- und/oder Anlernprozess fortführend, werden sodann im nächsten Schritt die Simulations- R2 und Bearbeitungsdaten R1 (bzw. Werkzeugmaschinenbearbeitungsdaten) innerhalb des Analyseabschnitts AA bearbeitet und zum Anlernen als Eingabeparameter an die künstliche Intelligenz AAKI geführt. Diese wiederum ist dabei so konfiguriert, dass sie je nach Ausbildung der KI-Art und durch Implementierung der Eingabeparameter das Verhalten des Bearbeitungsprozesses am Fertigungsabschnitt FA durch Vergleiche der Simulationsdaten R2 und Bearbeitungsdaten R1 (bzw. Werkzeugmaschinenbearbeitungsdaten) anlernt und gegebenenfalls eine Reihe von Simulationsveränderungsparameter (Bearbeitungsprozessanalyse) in Form einer Ausgabedatei F1 ausgibt, welche sowohl nach ihrer Generierung in die mit der Ausgabe 1 A1 deklarierten Iterationsschleife ausgegeben und in die dafür vorgesehene Technologiedatenbank DB3 gespeichert, als auch zur Optimierung der Simulation des digitalen Maschinenmodells in den Simulationsabschnitt SA zurückgeführt wird.

Wie bereits beschrieben kann das Anlernen der künstlichen Intelligenz AAKI, und damit auch der Generierungsprozess der Simulationsdaten R2, unabhängig von dem Bearbeitungsprozess an der Werkzeugmaschine durchgeführt und somit auch vor oder nach (oder während) der Fertigung des Werkstücks an der Werkzeugmaschine vollzogen werden. Gleichermaßen ist es möglich die künstliche Intelligenz AAKI auch durch extern eingeführte Eingabeparameter, in der Figur 1 durch den Prozess "KI-Anlernen" AL dargestellt, zu trainieren, sodass eine maximale Flexibilität des Optimierungsprozesses realisiert wird. Ferner kann die von der künstlichen Intelligenz AAKI entwickelte Ausgabedatei F1 ebenso nicht nur einzelne, von der Simulationssoftware zu verändernde Parameter beinhalten, welche beispielsweise über einen zusätzlichen in den Daten hinzugefügten Marker für die Simulation übernommen werden können, sondern auch ganze Einstellungen (Simulationsmodell, Simulationszeiten, Frameraten etc.) oder zu implementierende Funktionen (z.B. Wechselwirkungsfunktionen innerhalb der Modelle), insofern diese zuvor innerhalb der künstlichen Intelligenz AAKI deklariert wurden.

Die Implementierung der Simulationsveränderungsparameter der Ausgabedatei F1 in den Simulationsabschnitt SA kann dabei, je nach vorhergehenden Schritten und ausgearbeiteten Prozessablauf, verschiedene Optimierungsverläufe einleiten: wurde zum Anlernen der künstlichen Intelligenz AAKI beispielsweise bereits ein Bearbeitungsprozess simuliert, so kann mithilfe der Einführung der Simulationsveränderungsparameter dieser innerhalb des Simulationsabschnitts SA angepasst und zur weiteren Analyse (z.B. zum Vergleich mit dem Bearbeitungsprozess an der Werkzeugmaschine) zu Rate gezogen werden. Gleichermaßen ist es jedoch auch möglich, insbesondere bei bereits angelernten oder durch externe Daten trainierten künstlichen Intelligenzen AAKI, auch Prognosen zur Optimierung von noch nicht realisierten Bearbeitungs-prozessen zu erstellen und so, durch die Weitergabe der Ausgabedatei F1 an den Simulationsabschnitt SA, eine umfassend neue, bestmöglich effiziente Bearbeitungsprozesssimulation zu generieren.

In nachfolgenden Prozessen ist es zudem möglich, weitere Konsequenzen aus dem Optimierungsprozess der Simulation zu ziehen. So lassen sich beispielsweise bei gelungener Optimierung der Simulation die durch die künstliche Intelligenz AAKI erstellten Entscheidungsergebnisse und Systeminformationen (Systemveränderungsparameter, Gewichtungen, KI-Parameter, etc.) in einer finalen Ausgabe (Ausgabe 2 A2) entnehmen und zur Einsicht und Verbesserung des eigentlichen (d.h. realen) Werkzeugmaschinenbearbeitungsprozesses nutzen. Gleiches geschieht mit den innerhalb des Simulationsabschnitts entstandenen Simulationsparametern und -Informationen, was in diesem Fall in der Figur 1 mit dem Prozess der "Performance-Ausgabe" A3 deklariert wird.

Ferner lassen sich durch die Optimierung der Bearbeitungsprozesssimulation auch direkte Verbesserungen am Bearbeitungsprozess an der Werkzeugmaschine sowie dem Anlernprozess der künstlichen Intelligenz AAKI realisieren. Durch eine direkte Verbindung des Simulationsabschnitts SA mit dem Fertigungsabschnitt FA bzw. der Werkzeugmaschine, beispielsweise durch eine Datenübermittlung entsprechender Prozessdaten, kann die Optimierung des simulierten Bearbeitungsprozesses auch in einfachem Maße in den Bearbeitungsprozess der Werkzeugmaschine implementiert werden. Mit anderen Worten ermöglicht das hier gezeigte System eine simultane Anpassung des realen Bearbeitungsprozesses an und aufgrund der verbesserten, simulierten Prozessabläufe, was die Werkzeugmaschinenoptimierung wesentlich beschleunigen und somit kostengünstiger und effizienter gestalten kann. Darüber hinaus ist es möglich, die optimierten Simulationsdaten erneut in die Simulationsdatenbank DB2 einzuspeisen und somit der künstlichen Intelligenz AAKI zum Anlernen und zur abermaligen Verbesserung von weiteren Optimierungsvorgängen zur Verfügung zu stellen. Ein jeder Optimierungsprozess besitzt somit die Möglichkeit, die künstliche Intelligenz AAKI noch genauer an die Begebenheiten an der realen Werkzeugmaschine anzugleichen und damit iterativ, d.h. nach Vollenden einer Optimierungs- bzw. Iterationsschleife, die Entscheidungen und Ergebnisse der künstlichen Intelligenz AAKI stetig weiter zu verbessern.

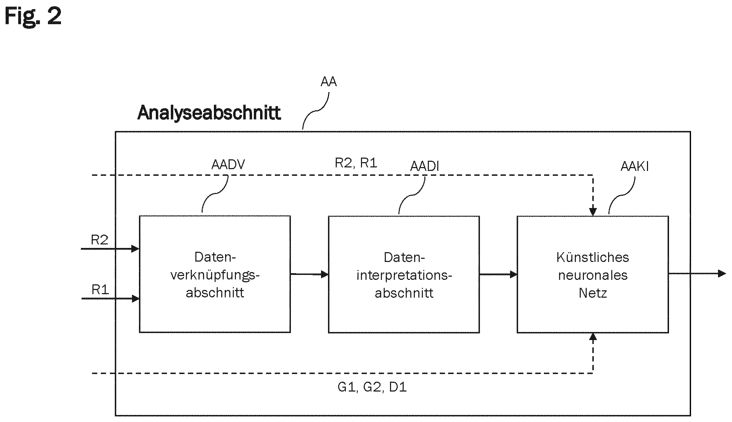

Figur 2 zeigt zudem eine detailliertere Netzwerkbeschreibung des Analyseabschnitts AA des bereits in Figur 1 dargestellten Ausführungsbeispiels, durch welchen die Implementierung der Lernparameter des künstlichen neuronalen Netzwerkes AAKI noch einmal genauer erklärt werden kann. Dabei werden zunächst die in den Simulations- R2 als auch Bearbeitungsdaten R1 enthaltenen Prozessparameter in einen in dem Analyseabschnitt AA implementierten Datenverknüpfungsabschnitt AADV eingeführt, in welchem diese beispielsweise zunächst durch ihre anhängenden Marker analysiert und entsprechende aus den Simulationsdaten R2 und den Bearbeitungsdaten R1 hervorkommende, vergleichbare Prozessparameter miteinander verknüpft werden. Letzteres kann hierbei auf mehrere Weisen, bspw. durch Kopieren und Abspeichern separater Prozessparameter in dafür vorgesehene Zwischenlagerplätze oder etwa das Markieren jener Parameter mit eigenständigen ID-Kennziffern, realisiert werden und bezieht sich lediglich auf das Verbinden von auf jeglicher Art zur Generierung von Lernparametern, auch Eingabeparameter genannt, für das künstliche neuronale Netzwerk AAKI führende Prozessparametern. Zudem können bereits bewährte Vergleichsprozesse, wie etwa digitales Mapping, zur Verknüpfung komplexerer Strukturen (z.B. zeitaufgelöste Datensätze) verwendet werden, sodass ein optimaler Vergleich zwischen simulierten und an der Werkzeugmaschine erhaltenen Prozessparametern ermöglicht wird.

Die so verknüpften Prozessparameterpaare und einzelne Prozessparameter werden daraufhin im nächsten Schritt von dem Datenverknüpfungsabschnitt AADV zum Dateninterpretationsabschnitt AADI des Analyseabschnitts AA weitergeführt, in welchem diese abermals identifiziert, in gewünschte Eingabeparameter E1 - EN für das darauffolgende künstliche neuronale Netzwerk AAKI umgeformt und schließlich in das künstliche neuronale Netzwerk AAKI eingeführt werden. Dabei kann als Umformen bzw. Generieren von Eingabeparametern E1 - EN jegliche Kombination oder mathematische Bearbeitung der Prozessparameter der Simulationsdaten R2 und Bearbeitungsdaten R1 und/oder Eingangsparameter, wie etwa die vom Eingangsdatenvorverarbeitungsabschnitt PRE entstandenen NC-Daten G1, kombinierte Geometriedaten G2 oder die im CAD/CAM-System generierten Operationsdateien D1, verstanden werden.

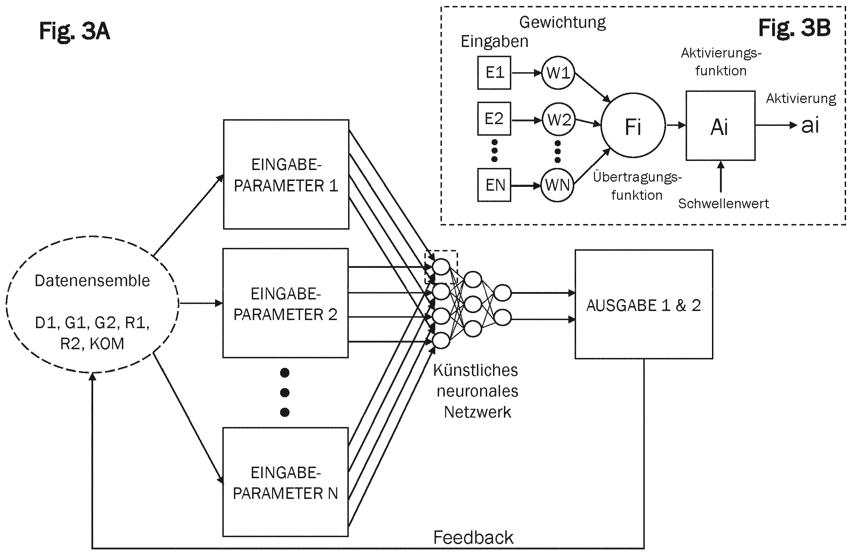

Figuren 3A und 3B zeigen zudem eine genauere Darstellung des Lernprozesses der künstlichen Intelligenz AAKI, welche in diesem Ausführungsbeispiel als künstliches neuronales Netzwerk in Form einer weiteren Netzwerkdarstellung dargestellt wird, wobei die Figur 3A die generelle Ein- und Ausgabe innerhalb des Netzwerkes und die Figure 3B eine Detaildarstellung des innerhalb eines künstlichen Neurons in einer Zwischenschicht ablaufenden Entscheidungsprozesses zeigt. Hierbei ist die gezeichnete Struktur des gezeigten Netzwerks alleinig als beispielhafte Darstellung zu verstehen.

Wie bereits beschrieben wird zunächst über die Ansammlung an durch den Fertigungsabschnitt FA und den Simulationsabschnitt SA generierten Prozessparametern sowie weiteren innerhalb des bisherigen Verfahrens entstandene Angaben ein Ensemble an potentiellen Eingabeparametern E1 - EN erzeugt, welche wiederum über den Dateninterpretationsabschnitt AADI weiter kombiniert und letztlich als neu kombiniertes Element KOM oder als einer der vorherig genannten Parameter als Eingabe in die erste Lernschicht des Netzwerkes eingeführt werden können. Als solches werden sie gemäß den Regeln selbstlernender Systeme innerhalb des betreffenden Neurons einer jeden Netzwerkschicht daraufhin für jeden Eingabeparameter entsprechend mit einer Gewichtung W1 - WN versehen, welcher vor Beginn der Lernphase mit zufälligen Werten belegt und über die einzelnen Lerniterationen mittels eines "Versuch-und-Irrtum"-Algorithmus allmählich zu den gewünschten Entscheidungsgewichtungen W1 - WN verändert werden. Im üblichen Sinne kann dabei die Interaktion der Eingabeparameter E1 - EN mit den jeweiligen Gewichtungen W1 - WN über eine Einfache Multiplikation Ei×Wi der jeweilig i-ten Parameter mit den i-ten Gewichtungen ablaufen, jedoch können in anderen Ausführungsbeispielen auch andere oder komplexere Funktionen gewählt werden.

In einem nächsten Schritt werden daraufhin die Eingaben-Gewichtungs-Kombination mittels einer Übertragungsfunktion Fi zu einer Netzwerkeingabe zusammengefasst. Beispielsweise kann auch hier nach den Regeln der künstlichen neuronalen Netzwerke eine einfache Summierung der Form ∑ᵢEᵢWᵢ zur Erstellung der Netzwerkeingabe genutzt werden, dies kann jedoch je nach Problemstellung und Anpassung des jeweiligen Optimierungsversuchs ebenso variiert werden.

Die Netzwerkeingabe wiederum bestimmt durch Eingabe in eine vordefinierte Aktivierungsfunktion Ai, ob ein künstliches Neuron bei Erhalt aller gewichteten und zusammengefassten Eingaben aktiviert ai und somit Informationen an die nächste Schicht weitergeben darf oder nicht. Dabei wird im Regelfall verglichen, ob die Aktivierungsfunktion Ai an der Stelle der Netzwerkeingabe einen bestimmten, ebenso anzulernenden Schwellenwert übersteigt (und somit das Neuron aktiviert ai) oder der hierdurch entstehende Wert nicht ausreicht und das Neuron in einem inaktiven Zustand verbleibt. Wie auch in den vorherigen Fällen kann hierbei die Aktivierungsfunktion frei gewählt werden, bevorzugt wird jedoch zumindest in diesem Ausführungsbeispiel eine Sigmoid-Funktion aufgrund ihrer an jeder Stelle stetigen und differenzierbaren Form favorisiert.

Durch Anlernen des künstlichen neuronalen Netzwerkes können somit gewählte Eingaben EN durch die mithilfe des Lernprozesses erzielten Gewichtungen WN von einer Netzwerkschicht zur nächsten transportiert und somit letztendlich in der letzten Schicht als favorisierte Simulationsparameter in die Ausgaben 1 bzw. 2 übergeben werden. Je nach Netzwerkstruktur können diese zudem an das ursprüngliche Eingabeensemble, beispielsweise in einem rekurrenten Netzwerksystem, oder einem bestimmten Neuron oder einer Schicht zurückgegeben werden, sodass sich ein aus den Ausgabedateien entstehendes Feedbacksystem entwickelt. Das Anlernen des Netzwerks, bzw. der zuvor genannten Gewichtungen W1 - WN, und in besonderen Fällen auch des Schwellenwerts, kann dabei bereits vor dem eigentlichen Zuführen der Eingabeparameter E1 - EN, beispielsweise mit zuvor definierten Trainingsdaten, vollzogen werden und kann somit unabhängig von dem eigentlichen Optimierungsprozess gesehen werden.

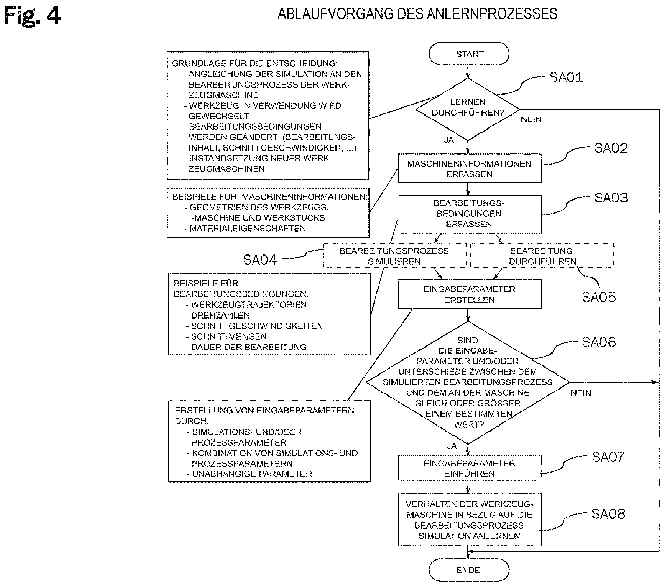

Figur 4 zeigt die Struktur des Anlernprozesses zudem noch einmal anhand eines den Ablauf des Anlernens beschreibendenden Flussdiagramms, in welchem der "Start" als allgemeiner Betriebsgedanke zum Vornehmen eines Trainingsvorgangs der KI und das "Ende" als erfolgreiches Anlernen der gewünschten Merkmale an die KI zu verstehen sind. Ein jeder Anlernprozess beginnt dabei zunächst mit der generellen Entscheidung des Systems (oder einer Person), einen Anlernvorgang der künstlichen Intelligenz AAKI durchführen zu wollen SA01, wobei als Grundlage für diese Entscheidungen verschiedene Faktoren einbezogen werden können. So kann der Anlernvorgang beispielsweise dazu genutzt werden, Prognosen für neu einzuwechselnde Werkzeuge, Betriebsmodi oder neu instand zusetzende Werkzeugmaschinen zu entwickeln, jedoch auch, um bestehende Bearbeitungsprozesssimulationen im Allgemeinen an gewünschte Begebenheiten, beispielsweise an den Betriebsablauf an der Werkzeug-maschine, anzupassen und so die Genauigkeit und Effizienz der Simulation zu steigern. Bei erfolgreicher Entscheidung werden daraufhin die für den Trainingsvorgang erforderlichen Maschineninformation SA02 und Bearbeitungsbedingungen SA03 gesammelt und zunächst für die Einführung in den die künstliche Intelligenz AAKI integrierten Analyseabschnitt AA vorbereitet. Als Maschineninformationen können hierbei alle physischen Informationen der Werkzeugmaschine, d.h. beispielsweise Geometrien, Größen, Materialeigenschaften oder physikalische Kennzeichen des Werkzeugs, Werkstücks und/oder der einzelnen Werkzeugmaschinenelemente gesehen werden, die zur erfolgreichen Beschreibung des anzulernenden Bearbeitungsprozesses genutzt werden können. Gleichermaßen sind als Bearbeitungsbedingungen alle diejenigen Maschineneinstellungen oder -Bedingungen, wie etwa Werkzeugtrajektorien, Drehzahlen oder Bearbeitungsgeschwindigkeiten, zu verstehen, welche den einzelnen (simulierten) Elementen der Werkzeugmaschine aufgetragen werden müssen, um den oben genannten Bearbeitungsprozess zu realisieren. Die Generierung dieser Daten kann dabei aus extern (bspw. einem Server oder einer Cloud) gespeicherten Datensätzen erfolgen. Optional können sie jedoch auch durch Ergebnisparameter von parallel oder zuvor durchgeführten Bearbeitungsprozesssimulation SA04 oder Bearbeitungsprozessen an Werkzeugmaschinen SA05 ergänzt oder überschrieben werden, sodass zu jeder Zeit und kontinuierlich aktuelle Informationen der Werkzeugbearbeitung in den Lernprozess der künstlichen Intelligenz einfließen können.

Darüber hinaus ermöglicht der direkte Vergleich der Simulationsergebnisse mit den realen Bearbeitungsbedingungen einen weiteren, im nächsten Schritt zu implementierenden Analyse- bzw. Entscheidungsprozess SA06. So kann nach Erstellen der für die künstliche Intelligenz AAKI definierten Eingabeparameter, bspw. nach der bereits oben genannten Art und Weise, durch den Vergleich der Simulations-R2 und Bearbeitungsdaten R1, jedoch auch durch die Eingabe- oder anderen Parametern per se, entschieden werden, ob ein Anlernen der künstlichen Intelligenz AAKI überhaupt notwendig ist oder z.B. derzeitige Simulationseinstellungen den gewünschten Bedingungen bereits genügen. Zu diesem Zweck können beispielsweise die oben genannten Parameter mit eigens definierten Grenzwerten verglichen und bei Unterschreitung letzterer zu einer automatischen Weiterführung des Anlernablaufes genutzt werden, wodurch sich ein für jeden Simulations- bzw. Anlernprozess individueller Trigger realisieren lässt. Als Konsequenz einer positiven Entscheidung ("ja") können zudem die Eingabeparameter nach den bereits oben genannten Schritten in den Analyseabschnitt AA bzw. der künstlichen Intelligenz AAKI eingeführt SA07 und so der Anlernprozess SA08 gestartet werden.

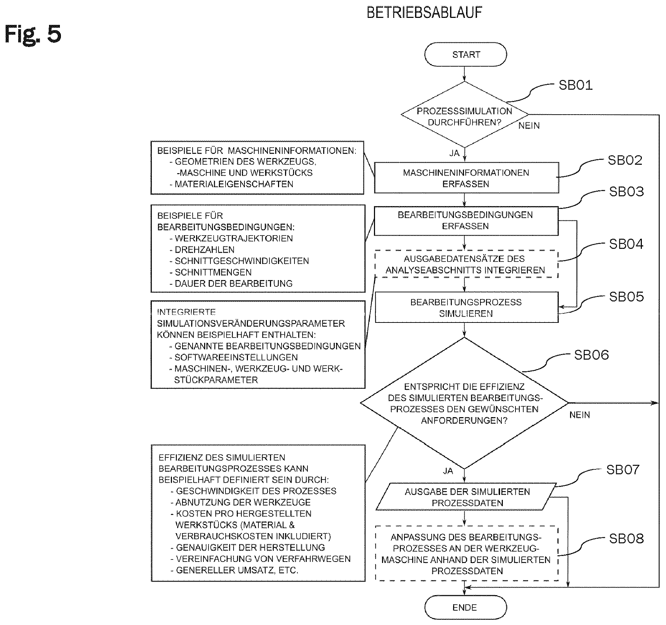

Figur 5 zeigt ferner die Struktur des Betriebsablaufs der Bearbeitungsprozesssimulation sowie fortführender Prozesse anhand eines weiteren Flussdiagramms. Als "Start" soll in diesem Fall der allgemeine Betriebsgedanke zum Beginnen der Bearbeitungsprozesssimulation und als "Ende" das erfolgreiche Beenden ebensolcher Simulation gesehen werden.

Analog zur Diagrammstruktur des Anlernprozesses beginnt dabei auch ein jeder Simulationsprozess mit der Entscheidung, letzteren zunächst durchzuführen SB01, wobei diese Entscheidung sowohl manuell, bspw. durch einen Mitarbeiter, oder automatisch, z.B. durch einen integrierten Programmcode oder der künstlichen Intelligenz AAKI, vollzogen werden kann. Ebenso analog werden bei einer positiven Eingabe ("ja") daraufhin die für die Simulation benötigten (digitalen) Maschineninformationen SB02 und Bearbeitungsbedingungen SB03 aus zur Verfügung stehenden Servern, Cloud-Services oder anderen Arten von Datenbanken erfasst und zur Implementierung in den entsprechenden Simulationsabschnitt SA vorbereitet. Hierbei können erstere sowohl die bereits oben genannten Informationsdaten über die physischen bzw. kinematischen Begebenheiten des Bearbeitungsprozesses enthalten, wie auch generelle, die Simulation betreffende Softwareeinstellungen (z. B. zu nutzende Engine, Simulationsmodelle, in der Software einzustellende Parameter).

In einem nächsten, optionalen Schritt können die einzuführenden Maschineninformationen und Bearbeitungsbedingungen, bzw. die durch diese zu erhaltenden Simulationsparameter, zudem durch die Einführung der vom Analyseabschnitt AA generierten Simulationsveränderungsparameter angepasst und so mithilfe der Entscheidungen der angelernten künstlichen Intelligenz AAKI optimiert werden SB04. Je nach Bearbeitungsprozess können dabei die Simulationsveränderungsparameter bzw. die diese Parameter beinhaltende Ausgabedatei F1 direkt von dem Analyseabschnitt AA ausgegeben oder aus bestehenden Datenbanken (z.B. der Technologiedatenbank DB3) entnommen werden, insofern die mit diesen verbundenen Maschineneigenschaften den Maschineninformationen und Bearbeitungsbedingungen der aktuell zu simulierenden Bearbeitungsprozesssimulation entsprechen.

Entsprechen daraufhin die zur Simulation zu nutzenden Simulationsparameter den gewünschten Vorgaben, so wird die Bearbeitungsprozesssimulation gestartet und fortfolgend ausgewertet SB05, wodurch der eigentliche Simulationsprozess als beendet angesehen werden kann. In einem weiterführenden Verfahren ist es jedoch möglich, nach Abgleich bestimmter Bedingungen SB06 (entspricht die Effizienz oder das Ergebnis der Simulation beispielsweise bestimmten Anforderungen), die aus der Bearbeitungsprozesssimulation gewonnen Ergebnisse bzw. Erkenntnisse auch für den Bearbeitungsprozess an der Werkzeugmaschine zu nutzen. So können z.B. nach der Sicherstellung der Qualität der Simulationsergebnisse (SB06 - "ja") letztere zunächst gesondert ausgegeben SB07 und für den weiteren Gebrauch, bspw. zur Analyse eventueller Ineffizienzen innerhalb der Werkzeugmaschine, übermittelt und/oder weiterverwendet werden. Darüber hinaus ist es auch (optional) möglich, die Simulationsergebnisse, aber auch z.B. die bei als effizient eingeordneten Bearbeitungsprozesssimulationen genutzten Simulationsparameter, direkt in die Werkzeugmaschine zu überführen SB08 und so die durch die optimierte Simulation gewonnen Effizienz- bzw. Prozesssteigerungen auch an der eigentlichen Werkzeug-maschine zu realisieren.

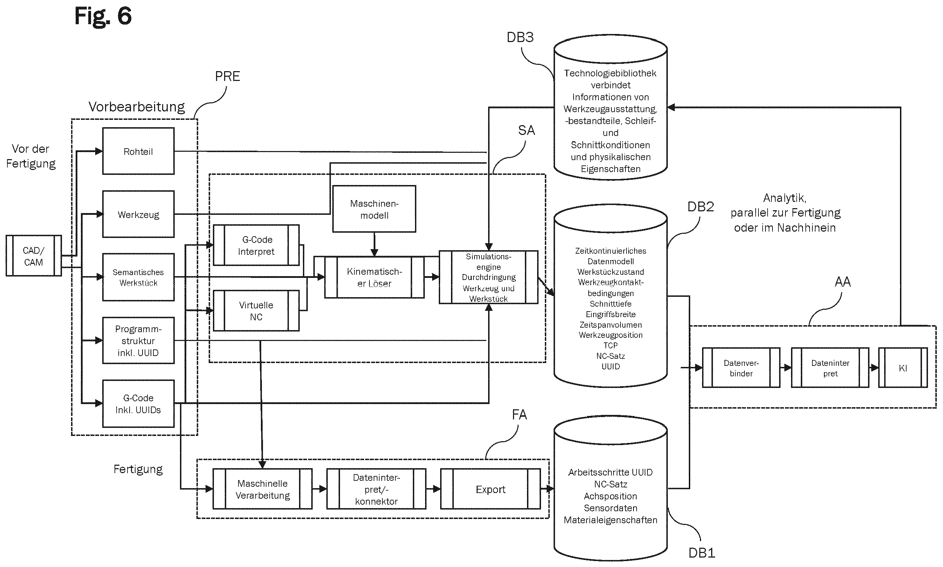

Figur 6 zeigt darüber hinaus eine Detailansicht einer Netzwerkdarstellung eines ähnlich zu dem in Figur 1 dargestellten Ausführungsbeispiels, in welcher insbesondere weitere Elemente und Wechselwirkungen der verschiedenen Verfahrensabschnitte aufgezeigt werden. So sind beispielsweise in dieser Figur die Kommunikationswege der einzelnen, gleichermaßen beispielhaften Elemente des Eingabedatenvorverarbeitungsabschnitts PRE dargestellt und mit den Bestandteilen des Simulationsabschnitts SA und des Fertigungsabschnitts FA verknüpft. Als Beispiel hierfür kann das Element der Programmstruktur, beispielsweise der geometrischen Daten des digitalen Maschinenmodells, oder der in diesem Fall bereits als G-Codes definierten NC-Daten gewählt werden, welche sowohl dem zur Fertigung des realen Werkstücks erfassten Fertigungsabschnitts FA, als auch der in dem Simulationsabschnitt SA befindlichen Simulationsengine zugeführt werden. Als weitere, bisher noch nicht beschriebene Elemente seien zudem die in dem Simulationsabschnitt SA befindlichen G-Code Interpreten, welcher zunächst die in dem Eingabedatenvorverarbeitungsabschnitt PRE generierten G-Codes der NC-Daten ausliest und einem kinematischen Löser zur Implementation der Bewegungsdaten einzelner Maschinenelemente in das zur Simulation zu nutzende Modell einführt, und die virtuelle NC, welche parallel zur Interpretation des jeweiligen NC-Daten-G-Codes eine virtuelle Kopie der NC-Daten erstellt und sie somit überhaupt für den zuvor genannten Kinematischen Löser aufnehmbar macht. Darüber hinaus ist auf die einzelnen, innerhalb der zuvor genannten Datenbanken DB1, DB2, DB3, jedoch insbesondere dem in der Simulationsdatenbank DB2 gespeicherten Parameter zu verweisen, welche z.B. neben den bereits beschriebenen Prozessparametern des Simulationsabschnitts SA auch weitere auf die Simulation bezogene Angaben, wie etwa das TCP, innehaben und somit eine große Variation an für das Anlernen der künstlichen Intelligenz AAKI zu nutzenden Parametern bieten.

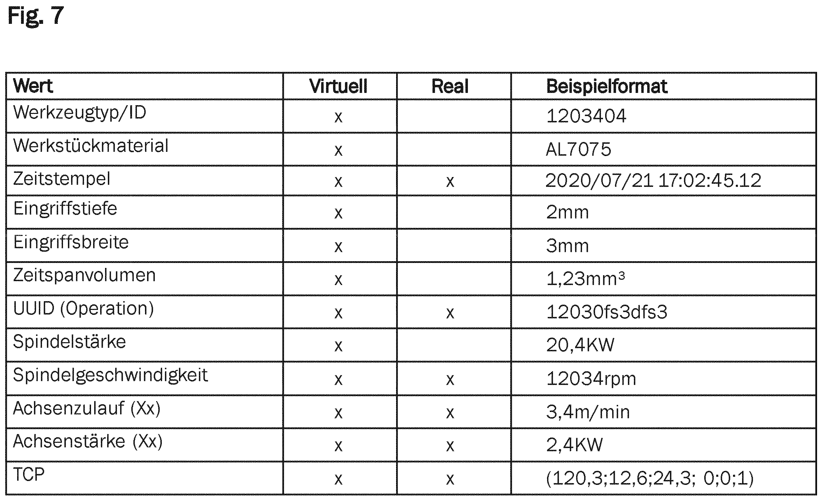

Figur 7 zeigt zudem eine beispielhafte Gegenüberstellung verschiedener mithilfe der realen Werkzeugmaschine und eines digitalen Maschinenmodells zu erhaltener Analyseparameter, wobei ein angegebenes x die Möglichkeit zum Erhalt des jeweiligen Parameters ausdrückt. Diese Daten können beispielsweise als Trainingsdaten für die künstliche Intelligenz AAKI verwendet werden. Insbesondere lässt sich an diesem Beispiel erkennen, dass gegenüber der realen Werkzeugmaschine eine Vielzahl von weiteren Elementen, wie etwa die Eingriffstiefe oder -breite des jeweiligen Werkzeugs in das Werkstück, einfach entnommen und zur Analyse und Verbesserung des jeweiligen Bearbeitungsprozesses übernommen werden können. Insofern bietet, speziell in komplexen, schwer ausführbaren und/oder kostspieligen Einführungsphasen neuer Werkzeugmaschinen, die Implementierung des Bearbeitungsprozesses in ein digitales Maschinenmodell eine sowohl kostengünstige, als auch effiziente Methode zur Verbesserung des Prozessablaufes an.

## Patentansprüche

1. Computerimplementiertes Verfahren zur Simulation eines Bearbeitungsprozesses eines Werkstückes an einer Werkzeugmaschine in Abhängigkeit von NC-Daten und/oder PLC-Daten, wobei zur Simulation des Bearbeitungsprozesses ein digitales Maschinenmodell der Werkzeugmaschine verwendet wird, das Verfahren umfassend die Schritte:
- Ausführen eines digitalen Bearbeitungsprozesses durch Simulation des Bearbeitungsprozesses am digitalen Maschinenmodell in einem Simulationsabschnitt (SA) basierend auf eingegebenen NC-Daten und/oder PLC-Daten und Speichern der Simulationsdaten;
- Aufzeichnen von Bearbeitungsdaten (R1) des Bearbeitungsprozesses an der Werkzeugmaschine, wobei der Bearbeitungsprozess in Abhängigkeit der eingegebenen NC-Daten und/oder PLC-Daten durchgeführt wird,
wobei die zum Steuern der Werkzeugmaschine genutzten NC-Daten und/oder PLC-Daten auch zum Bewegen der simulierten Elemente des digitalen Maschinenmodells verwendet werden;
- Zuführen der Simulationsdaten des digitalen Bearbeitungsprozesses und der Bearbeitungsdaten des Bearbeitungsprozesses an der Werkzeugmaschine zu einem Analyseabschnitt (AA) und Verknüpfen der Simulationsdaten und der Bearbeitungsdaten;
- nach Sicherstellung der Qualität der Simulationsergebnisse: Anpassen des Bearbeitungsprozesses an der Werkzeugmaschine anhand der Simulationsdaten,
wobei der Analyseabschnitt (AA) eine maschinelle Lernvorrichtung zur Analyse des Bearbeitungsprozesses basierend auf den verknüpften Daten umfasst und wobei der Analyseabschnitt (AA) das Ergebnis der Analyse ausgibt,
wobei ein Ausgabedatensatz des Analyseabschnitts Simulationsveränderungsparameter beinhaltet und dem Simulationsabschnitt zurückgeführt wird, wobei die Bearbeitungsprozesssimulation auf Grundlage des Ausgabedatensatzes optimiert wird,
**dadurch gekennzeichnet, dass**
zum Verknüpfen der Simulationsdaten mit den Bearbeitungsdaten Sensordaten der Werkzeugmaschine über ein kontinuierliches Datenmapping den korrespondierenden Analysedaten des Simulationsabschnitts (SA) zugeordnet werden, basierend auf einer zeitlichen Zuordnung der korrespondierenden Operationen, der NC-Zeilen und/oder der Achspositionen.

2. Computerimplementiertes Verfahren nach Anspruch 1,
wobei der Analyseabschnitt (AA) einen Datenverknüpfungsabschnitt AADV aufweist, in welchem Prozessparameter der Simulationsdaten (R2) des digitalen Bearbeitungsprozesses und Prozessparameter der Bearbeitungsdaten (R1) des Bearbeitungsprozesses an der Werkzeugmaschine miteinander verknüpft werden, und zum Anlernen der maschinellen Lernvorrichtung verwendet werden.

3. Computerimplementiertes Verfahren nach Anspruch 1 oder 2,
wobei der Ausgabedatensatz (F1) des Analyseabschnitts (AA) dem Simulationsabschnitt zur Anpassung des digitalen Bearbeitungsprozesses zurückgeführt wird.

4. Computerimplementiertes Verfahren nach einem der vorhergehenden Ansprüche,
wobei die Simulation des Bearbeitungsprozesses, das Zuführen der Simulationsdaten (R2) in den Analyseabschnitt (AA), das Zurückführen des Ausgabedatensatzes (F1) an den Simulationsabschnitt (SA) und das Verändern von Simulationsparametern im Simulationsabschnitt (SA) aufgrund des Ausgabedatensatzes (F1) in einer Programmschleife zur stetigen Anpassung der Simulation des Bearbeitungsprozesses ausgebildet sind.

5. Computerimplementiertes Verfahren nach zumindest einem der vorhergehenden Ansprüche,
wobei aufgrund des Ausgabedatensatz (F1) des Analyseabschnitts (AA) innerhalb des Simulationsabschnitts (SA) zumindest ein Simulationsparameter geändert wird, und
die aus der Simulation generierten Simulationsdaten (R2) oder zumindest ein Prozessparameter der Simulationsdaten (R2) vor dem Zuführen in den Analyseabschnitt (AA) in eine Simulationsdatenbank (DB2) gespeichert werden.

6. Computerimplementiertes Verfahren nach zumindest einem der vorhergehenden Ansprüche,
wobei für jeden Prozessparameter innerhalb der Bearbeitungsdaten (R1) zumindest ein entsprechender Prozessparameter innerhalb der Simulationsdaten (R2) existiert und/oder innerhalb des Simulationsprozesses generiert und den jeweiligen Prozessparameter der Bearbeitungsdaten (R1) zugeordnet wird, und/oder
wobei innerhalb des Analyseabschnitts (AA) die Bearbeitungsdaten (R1) und Simulationsdaten (R2) verglichen werden und mittels Vergleiches der Bearbeitungsdaten (R1) und Simulationsdaten (R2) Eingabeparameter für die maschinelle Lernvorrichtung definiert werden.

7. Computerimplementiertes Verfahren nach zumindest einem der vorhergehenden Ansprüche,
wobei der digitale Bearbeitungsprozess zeitlich parallel zum oder vor dem Bearbeitungsprozess an der Werkzeugmaschine durchgeführt wird und dabei durch Ausgabe der Simulationsdaten und Bearbeitungsdaten an den Analyseabschnitt eine Echtzeit- Ausgabe von Leistungsdaten des aktuellen Bearbeitungsprozesses ermöglicht wird, und bevorzugt Handlungsanweisungen zum Optimieren des Bearbeitungsprozesses an der Werkzeugmaschine ausgegeben werden.

8. Computerimplementiertes Verfahren nach zumindest einem der vorhergehenden Ansprüche,
wobei die maschinelle Lernvorrichtung ein künstliches neuronales Netzwerk (AAKI) ist welches konfiguriert ist die Simulationsparameter der Simulation des Bearbeitungsprozesses so zu optimieren, dass sich ein möglichst minimaler Unterschied zwischen den ausgewählten Prozessparameter der Bearbeitungsdaten (R1) und den Simulationsdaten (R2) ergibt.

9. Computerimplementiertes Verfahren nach zumindest einem der vorgehenden Ansprüche,
wobei das Anlernen der maschinellen Lernvorrichtung und das Optimieren des Simulationsprozesses durch die maschinelle Lernvorrichtung parallel und/oder unabhängig vom Bearbeitungsprozess an der Werkzeugmaschine durchgeführt wird.

10. Computerimplementiertes Verfahren nach zumindest einem der vorhergehenden Ansprüche,
wobei der durch die maschinelle Lernvorrichtung ausgegebene Ausgabedatensatz (F1) in einer erweiterbaren Technologiedatenbank (DB3) gespeichert wird und die maschinelle Lernvorrichtung zur Rückkopplung des Lernprozesses auf die in der Technologiedatenbank (DB3) gespeicherten Ausgabendatensätze (F1) zurückgreift; und/oder
wobei zur Angleichung der Arbeitsschritte zwischen dem Bearbeitungsprozess und dem Simulationsprozess die gleichen NC-Daten für den Bearbeitungsprozess an der Werkzeugmaschine und für die Simulation des Bearbeitungsprozesses am digitalen Maschinenmodell verwendet werden; und/oder
wobei durch die Simulation des Bearbeitungsprozesses am digitalen Maschinenmodell physikalische Parameter der Werkzeugmaschine, der Werkzeuge und des zu bearbeitenden Werkstücks ausgegeben werden, und die physikalischen Parameter der Werkzeugmaschine, der Werkzeuge und des zu bearbeitenden Werkstücks abhängig von dem Zeitpunkt des Bearbeitungsprozesses und/oder des jeweiligen Arbeitsschrittes definiert sind.

11. Computerimplementiertes Verfahren nach zumindest einem der vorgehenden Ansprüche,
wobei die NC-Daten zur Identifizierung des jeweiligen Arbeitsschrittes mit einem zusätzlichen Marker versehen sind, und
die Werkzeugmaschine und das digitale Werkzeugmaschinenmodell mithilfe des Markers innerhalb der NC-Daten interpretieren können, wodurch sie nachvollziehen können, in welchem Arbeitsschritt und/oder in welcher Position sich die Werkzeugmaschine und/oder die digitale Werkzeugmaschine zu einem bestimmbaren Zeitpunkt befindet.

12. Computerimplementiertes Verfahren nach zumindest einem der vorgehenden Ansprüche,
wobei die Arbeitsschritte des Bearbeitungsprozesses zusätzlich als Strukturdaten (G3) zur Interpretation der Arbeitsschritte in anderen Simulationseinrichtungen ausgegeben werden, und
die Werkzeugmaschine und das digitale Maschinenmodell über einen Parser Arbeitsschritte und/oder Prozessinformationen aus anderen Datenformaten entnehmen und implementieren können; und/oder
wobei die Strukturdaten (G3) zur Interpretation der Arbeitsschritte in anderen Systemen als XML-Datei oder als STEP-Datei ausgegeben werden.

13. Vorrichtung zum Steuern eines Bearbeitungsprozesses eines Werkstückes mittels einer Werkzeugmaschine in Abhängigkeit von NC-Daten und/oder PLC-Daten, umfassend
- eine Werkzeugmaschine zur Bearbeitung des Werkstückes mithilfe vorgegebener NC-Daten und/oder PLC-Daten,
- eine von der Werkzeugmaschine unabhängig ansteuerbare Simulationsvorrichtung zur Simulation des Bearbeitungsprozesses an einem digitalen Maschinenmodell basierend auf den vorgegebenen NC-Daten und/oder PLC-Daten,
- eine mit der Werkzeugmaschine und der Simulationsvorrichtung verbundene Analyseeinheit zur Anpassung von Simulationsparametern innerhalb der Simulationsvorrichtung,
wobei die Werkzeugmaschine konfiguriert ist, Bearbeitungsdaten (R1) des Bearbeitungsprozesses an der Werkzeugmaschine an die Analyseeinheit zu übertragen, und die Simulationsvorrichtung konfiguriert ist, Simulationsdaten (R2) des am digitalen Maschinenmodell simulierten Bearbeitungsprozesses, an die Analyseeinheit zu übertragen, und
die Analyseeinheit (AA) konfiguriert ist, mittels übertragenden Bearbeitungsdaten (R1) und Simulationsdaten (R2) das Verhalten der Werkzeugmaschine, des Werkzeugs und/oder eines zu bearbeitenden Werkstücks einer in der Analyseeinheit angeordneten maschinellen Lernvorrichtung anzulernen und das Ergebnis einer Analyse des Bearbeitungsprozesses der maschinellen Lernvorrichtung auszugeben,
wobei die Vorrichtung zur Ausführung eines Verfahrens nach einem der Ansprüche 1-12 eingerichtet ist.

14. Vorrichtung nach Anspruch 13, wobei die Werkzeugmaschine, die Simulationsvorrichtung und die Analyseeinheit konfiguriert sind, sich Daten, insbesondere Parameter- und/oder Performancedaten und/oder Hardware- und/oder Programmdaten, wechselseitig zu übertragen,
wobei die Übertragung der Daten mittels eines Intranets und/oder mittels Internet erfolgt; und/oder
wobei die Simulationsvorrichtung und die Analyseeinheit unabhängig von dem Bearbeitungsprozess an der Werkzeugmaschine sind, und
die Analyseeinheit konfiguriert ist, mittels Übermittlung des Ausgabedatensatzes (F1) der maschinellen Lernvorrichtung an die Simulationsvorrichtung den Bearbeitungsprozess an dem digitalen Maschinenmodell kontinuierlich an den Bearbeitungsprozess der Werkzeugmaschine anzugleichen.

## Claims

1. Computer-implemented method for simulating a machining process of a workpiece on a machine tool as a function of NC data and/or PLC data, wherein a digital machine model of the machine tool is used to simulate the machining process, the method comprising the steps of:
- executing a digital machining process by simulating the machining process on the digital machine model in a simulation section (SA) based on input NC data and/or PLC data and storing the simulation data;
- recording machining data (R1) of the machining process on the machine tool, wherein the machining process is carried out as a function of the input NC data and/or PLC data, wherein the NC data and/or PLC data used to control the machine tool are also used to move the simulated elements of the digital machine model;
- feeding the simulation data of the digital machining process and the machining data of the machining process on the machine tool to an analysis section (AA) and linking the simulation data and the machining data;
- after ensuring the quality of the simulation results: adapting the machining process on the machine tool on the basis of the simulation data,
wherein the analysis section (AA) comprises a machine learning device for analyzing the machining process based on the linked data and wherein the analysis section (AA) outputs the result of the analysis,
wherein an output data set of the analysis section includes simulation change parameters and is fed back to the simulation section, wherein the machining process simulation is optimized on the basis of the output data set, **characterized in that**
for linking the simulation data with the machining data, sensor data of the machine tool are assigned to the corresponding analysis data of the simulation section (SA) via a continuous data mapping, based on a temporal assignment of the corresponding operations, the NC lines and/or the axis positions.

2. Computer-implemented method according to claim 1,
wherein the analysis section (AA) has a data linking section AADV, in which process parameters of the simulation data (R2) of the digital machining process and process parameters of the machining data (R1) of the machining process on the machine tool are linked to one another and are used to teach the machine learning device.

3. Computer-implemented method according to claim 1 or 2,
wherein the output data set (F1) of the analysis section (AA) is fed back to the simulation section for adapting the digital machining process.

4. Computer-implemented method according to one of the preceding claims,
wherein the simulation of the machining process, the feeding of the simulation data (R2) into the analysis section (AA), the feeding back of the output data set (F1) to the simulation section (SA) and the changing of simulation parameters in the simulation section (SA) on the basis of the output data set (F1) are formed in a program loop for continuously adapting the simulation of the machining process.

5. Computer-implemented method according to at least one of the preceding claims,
wherein at least one simulation parameter is changed within the simulation section (SA) on the basis of the output data set (F1) of the analysis section (AA), and
the simulation data (R2) generated from the simulation or at least one process parameter of the simulation data (R2) are stored in a simulation database (DB2) before the feeding into the analysis section (AA).

6. Computer-implemented method according to at least one of the preceding claims,
wherein at least one corresponding process parameter exists within the simulation data (R2) for each process parameter within the machining data (R1) and/or is generated within the simulation process and assigned to the respective process parameters of the machining data (R1), and/or
wherein the machining data (R1) and simulation data (R2) are compared within the analysis section (AA) and input parameters for the machine learning device are defined by means of a comparison of the machining data (R1) and simulation data (R2).

7. Computer-implemented method according to at least one of the preceding claims,
wherein the digital machining process is carried out temporally parallel to or before the machining process on the machine tool and in this case a real-time output of performance data of the current machining process is made possible by outputting the simulation data and machining data to the analysis section, and preferably instructions for optimizing the machining process are output on the machine tool.

8. Computer-implemented method according to at least one of the preceding claims,
wherein the machine learning device is an artificial neural network (AAKI) configured to optimize the simulation parameters of the simulation of the machining process such that there is as minimal a difference as possible between the selected process parameters of the machining data (R1) and the simulation data (R2).

9. Computer-implemented method according to at least one of the preceding claims,
wherein the learning of the machine learning device and the optimization of the simulation process is carried out by the machine learning device in parallel and/or independently of the machining process on the machine tool.

10. Computer-implemented method according to at least one of the preceding claims,
wherein the output data set (F1) output by the machine learning device is stored in an expandable technology database (DB3) and the machine learning device resorts to the output data sets (F1) stored in the technology database (DB3) for feedback of the learning process; and/or
wherein the same NC data are used for the machining process on the machine tool and for the simulation of the machining process on the digital machine model to align the working steps between the machining process and the simulation process; and/or
wherein physical parameters of the machine tool, of the tools and of the workpiece to be machined are output by the simulation of the machining process on the digital machine model, and the physical parameters of the machine tool, of the tools and of the workpiece to be machined are defined as a function of the time of the machining process and/or of the respective working step.

11. Computer-implemented method according to at least one of the preceding claims,
wherein the NC data are provided with an additional marker to identify the respective working step, and
the machine tool and the digital machine tool model can be interpreted with the aid of the marker within the NC data, as a result of which they can reconstruct in which working step and/or in which position the machine tool and/or the digital machine tool is located at a determinable time.

12. Computer-implemented method according to at least one of the preceding claims,
wherein the working steps of the machining process are additionally output as structure data (G3) for interpreting the working steps in other simulation devices, and
the machine tool and the digital machine model can extract and implement working steps and/or process information from other data formats via a parser; and/or
wherein the structure data (G3) for interpreting the working steps in other systems are output as an XML file or as a STEP file.

13. Apparatus for controlling a machining process of a workpiece by means of a machine tool as a function of NC data and/or PLC data, comprising
- a machine tool for machining the workpiece using specified NC data and/or PLC data,
- a simulation device configured to be controlled independently of the machine tool, for simulating the machining process on a digital machine model based on the specified NC data and/or PLC data,
- an analysis unit connected to the machine tool and the simulation device for adapting simulation parameters within the simulation device,
wherein the machine tool is configured to transmit machining data (R1) of the machining process on the machine tool to the analysis unit, and the simulation device is configured to transmit simulation data (R2) of the machining process simulated on the digital machine model to the analysis unit, and
the analysis unit (AA) is configured to learn the behavior of the machine tool, of the tool and/or of a workpiece to be machined of a machine learning device arranged in the analysis unit by means of transmitted machining data (R1) and simulation data (R2) and to output the result of an analysis of the machining process of the machine learning device,
wherein the apparatus is configured to execute a method according to one of claims 1-12.

14. Apparatus according to claim 13, wherein the machine tool, the simulation device and the analysis unit are configured to mutually transmit data, in particular parameter data and/or performance data and/or hardware data and/or program data,
wherein the data are transmitted by means of an intranet and/or by means of the Internet; and/or
wherein the simulation device and the analysis unit are independent of the machining process on the machine tool, and
the analysis unit is configured to continuously match the machining process on the digital machine model to the machining process of the machine tool by means of transmission of the output data set (F1) of the machine learning device to the simulation device.

## Revendications

1. Procédé mis en œuvre par ordinateur pour simuler un processus d'usinage d'une pièce à œuvrer sur une machine-outil en dépendance de données NC et/ou de données PLC entrées, dans lequel un modèle de machine numérique de la machine-outil est utilisé pour simuler le processus d'usinage, le procédé comprenant les étapes consistant à :
- exécuter un processus d'usinage numérique par simulation du processus d'usinage sur le modèle de machine numérique dans une section de simulation (SA) sur la base de données NC et/ou de données PLC entrées, et sauvegarder les données de simulation ;
- enregistrer des données d'usinage (R1) du processus d'usinage sur la machine-outil, le processus d'usinage étant effectué en dépendance des données NC et/ou des données PLC entrées, les données NC et/ou les données PLC utilisées pour commander la machine-outil étant également utilisées pour déplacer les éléments simulés du modèle de machine numérique ;
- acheminer les données de simulation du processus d'usinage numérique et les données de simulation du processus d'usinage sur la machine-outil jusqu'à une section d'analyse (AA) et lier les données de simulation et les données d'usinage ;
- après s'être assuré de la qualité des résultats de simulation : adapter le processus d'usinage sur la machine-outil à l'aide des données de simulation,
dans lequel la section d'analyse (AA) comprend un dispositif d'apprentissage automatique destiné à analyser le processus d'usinage sur la base des données liées et dans lequel la section d'analyse (AA) sort le résultat de l'analyse,
dans lequel un ensemble de données de sortie de la section d'analyse contient des paramètres de modification de simulation et est renvoyé à la section de simulation, la simulation du processus d'usinage étant optimisée sur la base de l'ensemble de données de sortie,
**caractérisé en ce que**
pour lier les données de simulation aux données d'usinage, des données de capteurs de la machine-outil sont associées aux données d'analyse correspondantes de la section de simulation (SA) par l'intermédiaire d'un mappage de données en continu, sur la base d'une association temporelle des opérations correspondantes, des lignes NC et/ou des positions d'axe.

2. Procédé mis en œuvre par ordinateur selon la revendication 1,
dans lequel la section d'analyse (AA) présente une section de liaison de données AADV dans laquelle des paramètres de processus des simulations de données (R2) du processus d'usinage numérique et des paramètres de processus des données d'usinage (R1) du processus d'usinage sur la machine-outil sont liées les uns aux autres, et sont utilisés pour instruire le dispositif d'apprentissage automatique.

3. Procédé mis en œuvre par ordinateur selon la revendication 1 ou 2,
dans lequel l'ensemble de données de sortie (F1) de la section d'analyse (AA) est renvoyé à la section de simulation pour adapter le processus d'usinage numérique.

4. Procédé mis en œuvre par ordinateur selon l'une quelconque des revendications précédentes,
dans lequel la simulation du processus d'usinage, l'acheminement des données de simulation (R2) dans la section d'analyse (AA), le renvoi de l'ensemble de données de sortie (F1) vers la section de simulation (SA) et la modification de paramètres de simulation dans la section de simulation (SA) sont réalisés sur la base de l'ensemble de données de sortie (F1) dans une boucle de programme pour une adaptation constante de la simulation du processus d'usinage.

5. Procédé mis en œuvre par ordinateur selon l'une au moins des revendications précédentes,
dans lequel au moins un paramètre de simulation est modifié sur la base de l'ensemble de données de sortie (F1) de la section d'analyse (AA) au sein de la section de simulation (SA), et
les données de simulation (R2) générées à partir de la simulation ou au moins un paramètre de processus des données de simulation (R2) avant l'acheminement dans la section d'analyse (AA) sont sauvegardées dans une base de données de simulation (DB2).

6. Procédé mis en œuvre par ordinateur selon l'une au moins des revendications précédentes,
donc lequel, pour chaque paramètre de processus au sein des données d'usinage (R1), au moins un paramètre de processus correspondant existe au sein des données d'usinage (R2) et/ou est généré au sein du processus d'usinage et est associé au paramètre correspondant des données d'usinage (R1), et/ou
dans lequel, au sein de la section d'analyse (AA), les données d'usinage (R1) et les données de simulation (R2) sont comparées et des paramètres d'entrée pour le dispositif d'apprentissage automatique sont définis au moyen d'une comparaison des données d'usinage (R1) et des données de simulation (R2).

7. Procédé mis en œuvre par ordinateur selon l'une au moins des revendications précédentes,
donc lequel le processus d'usinage numérique est effectué parallèlement dans le temps ou avant le processus d'usinage sur la machine-outil tout en permettant, en sortant les données de simulation et les données d'usinage à la section d'analyse, une sortie en temps réel de données de performance du processus d'usinage actuel, et de préférence des instructions d'action visant à optimiser le processus d'usinage sur la machine-outil sont sorties.

8. Procédé mis en œuvre par ordinateur selon l'une au moins des revendications précédentes,
dans lequel le dispositif d'apprentissage automatique est un réseau neuronal artificiel (AAKI) qui est configuré pour optimiser les paramètres de simulation de la simulation du processus d'usinage de manière obtenir une différence la plus minime possible entre les paramètres de processus sélectionnés des données d'usinage (R1) et des données de simulation (R2).

9. Procédé mis en œuvre par ordinateur selon l'une au moins des revendications précédentes,
dans lequel l'instruction du dispositif d'apprentissage automatique et l'optimisation du processus de simulation par le dispositif d'apprentissage automatique sont exécutées en parallèle et/ou indépendamment du processus d'usinage sur la machine-outil.

10. Procédé mis en œuvre par ordinateur selon l'une au moins des revendications précédentes,
dans lequel l'ensemble de données de sortie sorties par le dispositif d'apprentissage automatique (F1) est sauvegardé dans une base de données technologiques extensible (DB3) et le dispositif d'apprentissage automatique a recours aux ensembles de données de sortie (F1) sauvegardés dans la base de données technologiques (DB3) pour la rétroaction du processus d'apprentissage ; et/ou
dans lequel, pour harmoniser les étapes de travail entre le processus d'usinage et le processus de simulation, les mêmes données NC sont utilisées pour le processus d'usinage sur la machine-outil et pour la simulation du processus d'usinage sur le modèle de machine numérique ; et/ou
dans lequel, par la simulation du processus d'usinage sur le modèle de machine numérique, des paramètres physiques de la machine-outil, des outils et de la pièce à œuvrer devant être usinée sont sortis, et les paramètres physiques de la machine-outil, des outils et de la pièce à œuvrer devant être usinée sont définis en dépendance du moment du processus d'usinage et/ou de l'étape de travail correspondante.

11. Procédé mis en œuvre par ordinateur selon l'une au moins des revendications précédentes,
dans lequel les données NC sont pourvues d'un marqueur supplémentaire pour identifier l'étape de travail respective, et
la machine-outil et le modèle de machine-outil numérique peuvent interpréter à l'aide du marqueur au sein des données NC, grâce à quoi ils peuvent reconstituer dans quel état de travail et/ou dans quelle position la machine-outil et/ou la machine-outil numérique se trouvent à un moment à définir.

12. Procédé mis en œuvre par ordinateur selon l'une au moins des revendications précédentes,
dans lequel les étapes de travail du processus d'usinage sont sorties en outre en tant que données structurelles (G3) pour interpréter des étapes de travail dans d'autres installations de simulation, et
la machine-outil et le modèle de machine numérique peuvent extraire et mettre en œuvre, via un analyseur syntaxique, des étapes de travail et/ou des informations de processus provenant d'autres formats de données ; et/ou
dans lequel les données structurelles (G3) sont sorties pour interpréter les étapes de travail dans d'autres systèmes en tant que fichier XML ou en tant que fichier STEP.

13. Dispositif de commande d'un processus d'usinage de pièce à œuvrer au moyen d'une machine-outil en dépendance de données NC et/ou de données PLC, comprenant
- une machine-outil destinée à usiner la pièce à œuvrer à l'aide de données NC et/ou de données PLC entrées,
- un dispositif de simulation pilotable indépendamment depuis la machine-outil pour simuler le processus d'usinage sur un modèle de machine numérique sur la base des données et/ou des données PLC prédéfinies,
- une unité d'analyse reliée à la machine-outil et au dispositif de simulation pour adapter des paramètres de simulation au sein du dispositif de simulation,
dans lequel la machine-outil est configurée pour transférer des données d'usinage (R1) du processus d'usinage sur la machine-outil à l'unité d'analyse, et le dispositif de simulation est configuré pour transférer des données de simulation (R2) du processus d'usinage simulé sur le modèle de machine numérique à l'unité d'analyse, et
l'unité d'analyse (AA) est configurée pour, au moyen de données d'usinage (R1) et de données de simulation (R2) transférées, apprendre le comportement de la machine-outil, de l'outil et/ou d'une pièce à œuvrer devant être usinée à un dispositif d'apprentissage automatique agencé dans l'unité d'analyse, et pour sortir le résultat d'une analyse du processus d'usinage du dispositif d'apprentissage automatique,
dans lequel le dispositif est configuré pour exécuter un procédé selon l'une des revendications 1 à 12.

14. Dispositif selon la revendication 13, dans lequel la machine-outil, le dispositif de simulation et l'unité d'analyse sont configurés pour se transférer mutuellement des données, en particulier des données de paramètres et/ou des données de performance et/ou des données matérielles et/ou des données de programmes,
dans lequel le transfert des données s'effectue par un Intranet et/ou par Internet ; et/ou
dans lequel le dispositif de simulation et l'unité d'analyse sont indépendantes du processus d'usinage sur la machine-outil, et
l'unité d'analyse est configurée pour, au moyen de la transmission de l'ensemble de données de sortie (F1) du dispositif d'apprentissage automatique au dispositif de simulation, harmoniser en continu le dispositif d'usinage sur le modèle de machine numérique et le processus d'usinage de la machine-outil.
